# EUROPEAN PATENT APPLICATION

(11) **EP 3 683 722 A1**
(43) Date of publication of application: **22.07.2020**
(21) Application number: 20152558.1
(22) Date of filing: 17.01.2020
(51) Int. Cl.: G06K 9/00, G06Q 10/08

(54) **ACTIVE IDENTIFICATION AND DIMENSIONING**

(30) Priority: 18.01.2019 US 201916252366
(71) Applicant: Alitheon, Inc., Bellevue, WA 98004 (US)
(72) Inventor: Crowley, Brian, Bellevue, WA 98004 (US); Smyth, Don, Bellevue, WA 98004 (US); Ross, David Justin, Bellevue, WA 98004 (US)
(74) Representative: Herre, Peter

(57) **Abstract**

Object identification and dimensioning system, device, and method embodiments generate a plurality of object records associated with corresponding physical objects. An image input sub-system provides N sets of image data, wherein N is an integer that begins at one and increases incrementally. An output record sub-system provides an object record to a determined function. The object record has object identification information and object dimension information associated with a certain physical object. And a processor-based sub-system begins with a first of N set of image data and incrementally processes each of N sets of image data until a record corresponding to the certain physical object is located in a repository or until N has reached a determined maximum number of image data sets.

## Description

### BACKGROUND

### Technical Field

The present disclosure generally relates to object identification and object dimensioning. More particularly, but not exclusively, the present disclosure relates to a system that identifies and dimensions physical objects and communicates the identification and dimension information to another function that acts on one or both of the identification information and dimension information.

### Description of the Related Art

Many conveyance systems exist to transport physical objects, such as luggage or packages, from one location to another location. Conveyor belts, for example, are used in airports, docks, train stations, warehouses, manufacturing facilities, and other like facilities. Other conveyance systems may be rail-based or track-based, and these systems may have carts, bins, or some other means of holding physical objects as the objects are transported from a first location to a second location.

Physical object identification systems exist to uniquely identify objects. For example, serial numbers, bar codes, holographic labels, RFID tags, and hidden patterns using security inks or special fibers are employed to identify objects. Digital fingerprinting techniques are also used to identify physical objects.

U.S. Patent No. 9,350,552 to Elmenhurst et al., for example, is directed toward an automated document processing machine that includes an electro-mechanical transport subsystem and a camera. The camera is arranged to capture an image of a document being conveyed by the transport subsystem through the machine. A fingerprinting software component is also included to create a unique digital fingerprint of the document based on a captured image. The digital fingerprint is responsive to indicia on document.

As another example, U.S. Patent No. 9,582,714 to Ross et al., is directed to systems, methods, and devices for tracking a physical object to identify or authenticate the object utilizing digital fingerprints. In this case, the digital fingerprints are based on intrinsic (i.e., natural) features extracted from a digital image of the physical object. The digital fingerprints do not require or rely on any labels, tags, integrated materials, unique identification characters, codes or other items that may be added to the object specifically for the purpose of identification. Consequently, the disclosed digital fingerprint techniques can be used to track and trace a wide variety of objects throughout a distribution chain and demonstrate the provenance of the particular objects and to detect counterfeit objects.

The disclosures of all references mentioned above and throughout the specification, as well as the disclosures of all references mentioned in those references, are hereby incorporated herein by reference.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY

In some cases, computer-based systems that act on physical objects are improved when they have access to both identification information and dimension information. In some cases, the identification information is sufficient to uniquely identify each package from all other packages. In other cases, the identification information is sufficient to identify each package as a particular type of package distinguished from other types; however the identification may or may not uniquely identify the package amongst all other packages everywhere. In various cases, the dimension information may be a bounding volume (e.g., length, width, and height; diameter and length; small, medium, large; or some other bounding volume), a weight, a color or colors, a flexibility factor, a compressibility factor, a mass, or some other dimensional measurement or characteristic.

Package routing systems, for example, move thousands of packages every hour on conveyance systems. In these cases, it is important to efficiently route every package from a first location to a second location. The routing of every particular package may be based on any one or more of its identity, size, weight, proportions, color, flexibility, or compressibility. In these cases, a conveyance system that can make individual routing decisions based on any one or more these characteristics of a package, alone or in combination, may be improved. As discussed in detail in the present disclosure, embodiments of the inventive features may be implemented as carry-on luggage dimensioning systems, baggage handling systems, cargo loading systems, anti-smuggling systems, tariffing systems, and many other tracking, sorting, filtering, and conveyance systems.

Object identification and dimensioning system, device, and method embodiments generate a plurality of object records associated with corresponding physical objects. In at least some cases, an image input sub-system provides N sets of image data, wherein N is an integer that begins at one and increases incrementally. An output record sub-system provides an object record to a determined function. The determined function may be any type of function that operates in a system where physical objects are identified, acted on, tracked, transported, or processed in some other way. The object record has object identification information and object dimension information associated with a certain physical object. And a processor-based sub-system begins with a first of N sets of image data and incrementally processes each of N sets of image data until a record corresponding to the certain physical object is located in a repository or until N has reached a determined maximum number of image data sets.

The incremental processing of each of the N sets of image data includes acts to receive the Nth set of image data from the image input sub-system, generate an Nth set of dimension information, and generate an Nth digital fingerprint, which are added to a temporary record. A repository is queried to locate a record corresponding to the temporary record. If the querying locates the record corresponding to the temporary record, the object record is defined as the record located by the querying. If N has reached the determined maximum number of image data sets, the temporary record is stored in the repository and the object record is defined as the temporary record. Processing continues incrementally on a next one of the N sets of image data.

In a first embodiment, a method includes providing a physical object, creating an object record corresponding to a physical object, creating a temporary object record, and initializing the temporary object record with initial dimension information and initial identification information. The acts of the method also define "N," wherein N is an integer that begins at one and increases incrementally, and the acts process each of N sets of image data. The processing includes: generating an Nth digital fingerprint from the Nth set of image data; generating an Nth set of dimension information from the Nth set of image data; adding the Nth digital fingerprint and the Nth set of dimension information to the temporary object record; and querying a repository to locate a record corresponding to the temporary object record. If the querying locates the record in the repository corresponding to the temporary object record, the object record is defined as the record located by the querying. If N has reached a determined maximum number of image data sets, the temporary object record is stored in the repository and the object record is defined as the temporary object record. The method also includes the acts of incrementally continuing said processing of a next set of image data unless the querying has located the record corresponding to the temporary object record or N has reached the determined maximum number of image data sets, communicating the object record to at least one function, and performing the function.

In some cases of the first embodiment, the method includes processing a first set of image data, generating a first digital fingerprint from the first set of image data, generating a first set of dimension information from the first set of image data, adding the first digital fingerprint and the first set of dimension information to a first object record, defining the first object record as the object record, and storing the first object record in the repository. In some cases, these acts are performed to induct object records into the repository before the repository is searched for the first digital fingerprint.

In some cases, the first embodiment carries out a method that includes a particular function. The particular function is an automated airline passenger checked baggage function, and the first set of image data represents at least one digital image of a first passenger's checked luggage. In some of these cases, the method includes processing a first set of airline passenger data, wherein the first set of airline passenger data includes information representing a commercial flight on which the first passenger and the first passenger's checked luggage are booked to travel, and the method also includes adding the first set of airline passenger data to the object record. In some of these cases, the method also includes forming the repository as an exclusive repository dedicated to the commercial flight, processing airline passenger data for each passenger that checks luggage on the commercial flight, and verifying, via querying the exclusive repository, that each piece of checked passenger luggage that enters a cargo hold of an aircraft scheduled to conduct the commercial flight is associated with a passenger booked to travel on the commercial flight. And in these or still others of these cases, the method includes receiving information indicating that the commercial flight has concluded, and based on the received information, flushing the exclusive repository of object records associated with passengers on the commercial flight.

In some cases of the first embodiment, the at least one function is an automated object transit function, an object tracking function, a cargo space loading function, or a passenger carry-on luggage function. In some cases, the determined maximum number of image data sets is 10.

Also in some cases, the Nth set of dimension information includes a bounding volume having dimension information sized to entirely contain the physical object. In these cases, the bounding volume may have a length, a width, and a height; the bounding volume may have at least one square cross section; and the bounding volume may have a radius. In these cases the bounding volume may be a convex hull; the bounding volume may be all or part of the surface shape of the object.

In some cases of the first embodiment, the Nth digital fingerprint is generated only from intrinsic properties of the physical object represented in the Nth set of image data. And some cases also comprise providing an image capturing device, and capturing each of the N sets of image data with the image capturing device when the physical object is in motion. These or other acts of the first embodiment include adding user-defined information to the temporary object record before storing the temporary object record in the repository.

In a second embodiment, an object identification and dimensioning system is arranged to generate a plurality of object records, each one of the plurality of object records associated with a corresponding physical object. The system includes an image input sub-system arranged to provide N sets of image data, wherein N is an integer that begins at one and increases incrementally; an output record sub-system arranged to provide an object record to a determined function, the object record having object identification information and object dimension information, the object record associated with a certain physical object; and a processor-based sub-system that, when in operation, is arranged to begin with a first of N sets of image data and incrementally process each of the N sets of image data until a record corresponding to the certain physical object is located in a repository or N has reached a determined maximum number of image data sets, the incremental processing of each of the N sets of image data including certain acts. The certain acts include: receiving the Nth set of image data from the image input sub-system; generating an Nth set of dimension information from the Nth set of image data; generating an Nth digital fingerprint from the Nth set of image data; adding the Nth set of dimension information and the Nth digital fingerprint to a temporary object record; and querying the repository to locate a record corresponding to the temporary object record. If querying the repository locates the record corresponding to the temporary object record, defining the object record as the record corresponding to the temporary object record located by the querying. If N has reached the determined maximum number of image data sets, storing the temporary object record in the repository and defining the object record as the temporary object record. The certain acts also include incrementally continuing said processing of a next one of the N sets of image data unless the querying has located the record corresponding to the temporary object record or N has reached the determined maximum number of image data sets.

In some cases of the second embodiment, the certain physical object comprises a plurality of physical objects packaged together. In some cases, the certain physical object comprises one of a plurality of physical objects of a same type. In some cases, the certain physical object is a piece of carry-on luggage. And in some cases the image input sub-system comprises at least one camera device.

In a third embodiment, a non-transitory computer-readable storage medium has stored contents that configure a computing system to perform a method. The method includes the acts of: creating an object record corresponding to a certain physical object; initializing a temporary object record with initial dimension information and initial identification information; and incrementally processing N sets of image data, wherein N is an integer that begins at one and increments with processing of each corresponding set of image data. The incremental processing includes: from the Nth set of image data, generating an Nth set of dimension information and at least one digital fingerprint; adding the Nth set of dimension information and the at least one digital fingerprint to the temporary object record; and querying a repository to locate a record corresponding to the temporary object record. If the querying locates the record in the repository corresponding to the temporary object record, the object record is defined as the record located by the querying. If N has reached a determined maximum number of image data sets, the temporary object record is stored in the repository and the object record is defined as the temporary object record. The incremental processing also includes, after the querying has located the record corresponding to the temporary object record or N has reached the determined maximum number of image data sets, communicating the object record to at least one function.

In some cases of the third embodiment, the method includes generating the Nth set of dimension information as a bounding volume of the certain physical object. In some cases, the method includes performing the incremental processing via a remote computing system. In some cases, the bounding volume is provided as an input to a package transit system. And in some cases, the function is an automated object transit function, an object tracking function, a cargo space loading function, or a passenger carry-on luggage function.

These features, along with other objects and advantages that will become subsequently apparent, reside in the details of construction and operation more fully described hereafter and claimed, reference being made to the accompanying drawings that form a part hereof.

This Brief Summary has been provided to introduce certain concepts in a simplified form that are further described in detail below in the Detailed Description. Except where otherwise expressly stated, the Brief Summary does not identify key or essential features of the claimed subject matter, nor is it intended to limit the scope of the claimed subject matter.

### BRIEF DESCRIPTION OF THE SEVERAL VIEWS OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1A is a simplified flow diagram illustrating a method for creating a storing a digital fingerprint of an object in a database;
FIG. 1B is a flow diagram illustrating a process that includes more robust feature extraction;
FIG. 2 is a set of exemplary records arranged to store, retrieve, and process identification information, dimension information, and optional additional information;
FIGS. 3A-3J present non-limiting shape embodiments that may be represented in dimension information;
FIG. 4 is an embodiment of a system that employs at least one identification and dimensioning station;
FIG. 5 is a non-limiting embodiment of an identification and dimensioning station in more detail;
FIG. 6 is an embodiment of an exemplary physical object transport system;
FIG. 7A is a conventional airline baggage sizing kiosk;
FIG. 7B is an embodiment of an improved baggage sizing kiosk;
FIG. 8 is a data flow diagram of a method for matching identification information of a physical object to identification information stored in a repository;
FIG. 9A is a data flow diagram of a method for generating and using identification information and dimension information that is stored in a repository;
FIG. 9B is a data flow diagram of a method for initializing an exclusive repository; and
FIG. 9C is a data flow diagram of a method for completing a function and cleaning up the exclusive repository.

### DETAILED DESCRIPTION

The present invention may be understood more readily by reference to this detailed description of the invention. The terminology used herein is for the purpose of describing specific embodiments only and is not limiting to the claims unless a court or accepted body of competent jurisdiction determines that such terminology is limiting. Unless specifically defined herein, the terminology used herein is to be given its traditional meaning as known in the relevant art.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with computing systems including client and server computing systems, as well as networks have not been shown or described in detail to avoid unnecessarily obscuring descriptions of the embodiments.

Prior to setting forth the embodiments however, it may be helpful to an understanding thereof to first set forth definitions of certain terms that are used hereinafter.

The term "identification information" is used, in all its grammatical forms and constructs, throughout the present specification and claims to refer to any single or plural information that: 1) identifies a physical object uniquely amongst a plurality of physical objects; or that 2) identifies a physical object as one of a particular type (e.g., a particular "class") of object. In the first case, wherein a physical object is uniquely identified amongst a plurality of physical objects, the plurality may be of any desirable number of physical objects. That is, one physical object may be identified and distinguished from all other physical objects on a pallet, in a bin, in a lot, in a warehouse, in the world, or in any other plurality. In some non-limiting examples, a particular package being transported may be uniquely identified and distinguished from all other packages in the truck, from all other packages in the container, from all other packages in the warehouse, or even from all other packages in the world. In the second case, wherein a physical object is identified as one of a particular type, the physical object may be identified as being one of any number of different types of package. Non-limiting examples of physical object types, or "classes" related to packages (e.g., boxes, luggage, cargo, barrels, and many other types of packages) include, without limitation, packages that are small, medium, and large; packages that are an approved size and oversized; packages that have particular linear dimensions; packages that are heavy; packages that are an approved weight and overweight or underweight; packages that can be compressed by a particular amount or compression factor; packages that can be flexed by a particular amount (e.g., 20 degrees, 90 degrees, 180 degrees) or flex factor; packages that can be generally distorted (e.g. soft packages); packages that can be stacked; packages that have complex shapes; packages associated with a particular lot number; and packages that have a determined color. Many other package types (i.e., many other physical object types (e.g., classes)) are also contemplated. The single or plural identification information may be a number, a code, a color, an image, or any other type of information that identifies the physical object to a relevant entity, party, or device of interest. In at least some cases described herein, the identification information comprises one or more digital fingerprints. Any portion of the identification information, or all of it, may be determined when the physical object is static (i.e., completely or substantially motionless) or when the physical object is in motion.

The term "digital fingerprint" in all its grammatical forms and constructs, is used throughout the present specification and claims to refer to a computationally unique digital identifier of a physical object or a portion of a physical object. To the limitations of the available computational resources, each and every digital fingerprint identifying a determined portion of a physical object is different from each and every other digital fingerprint identifying a different physical object or identifying a different portion of the same physical object. And to the limitations of the available computational resources and the preservation of the determined portion of the physical object on which a first digital fingerprint is generated, each and every subsequent digital fingerprint identifying the same determined portion of the same physical object is statistically the same as the first digital fingerprint. In at least some cases, a digital fingerprint, as the term is used herein, is generated in a method that includes acquiring a digital image, finding points of interest within that digital image (*e.g*., generally, regions of disparity where "something" is happening, such as a white dot on a black background or the inverse), and characterizing those points of interest into one or more feature vectors extracted from the digital image. Characterizing the points of interest may include assigning image values, assigning or otherwise determining a plurality of gradients across the image region, or performing some other technique. The extracted feature vectors may or may not be analyzed or further processed. Instead, or in addition, the extracted feature vectors that characterize the points of interest in a region are aggregated, alone or with other information (*e.g*., with location information) to form a digital fingerprint. In at least one other method, a digital fingerprint, as the term is used herein, is generated with acts that include acquiring a first digital image of a physical object, parsing the digital image into at least one region of interest, extracting identifying information from the region of interest, the identifying information including at least one feature of the region of interest, and combining the at least one feature for each region of interest to form a digital fingerprint of the physical object. To add clarity, but not limitation, further examples of methods and acts to form digital fingerprints are described in U.S. Patent No. 9,350,552 to Elmenhurst et al., and U.S. Patent No. 9,582,714 to Ross et al., both of which references are hereby incorporated herein by reference.

The term "dimension information" is used, in all its grammatical forms and constructs, throughout the present specification and claims to refer to any single or plural information that describes a physical size, shape, weight, or other like characteristic of a physical object. Dimension information may, for example, include a bounding volume (*e.g*., length, width, and height; diameter and length; small, medium, large; a simple shape; a complex shape; or some other bounding volume), a weight, a color or colors, a flexibility factor, a compressibility factor, or some other dimensional measurement or characteristic. Dimension information, in some cases, may include additional qualifying information associated with the physical size, shape, weight, color, or other like characteristic of the physical object. Some examples of such qualifying information include temperature, humidity, or another environmental value wherein such additional information may account for changes in size or shape of the physical object due to altitude, (*e.g*., to account for an increase in size of some objects at different air pressure), temperature, or the like. Any portion of the dimension information, or all of it, may be determined when the physical object is static (*i.e*., completely or substantially motionless) or when the physical object is in motion.

The terms "digital image data," "digital image," and other like terms used in the present specification and claims are directed toward electronically storable information, which can be processed with a computing device. Digital image data may be acquired from a common image sensor, a specially-adapted sensor array such as CCD array, a memory device, a scanner, a camera, a microscope, a smart phone camera, a video camera, an x-ray machine, a streaming communication medium, or any other suitable source. The digital image data may be derived from two-dimensional data, three-dimensional data, video data, composite data from several images, or the digital image data may be derived in any other suitable way. Broadly, any device that can sense and capture radiating signals (*e.g*., electromagnetic radiation, sound, or the like) that has traveled through an object, or reflected off of an object, is a candidate to create image data suitable for use in embodiments of the present disclosure. Various means to extract digital fingerprints or features from a physical object may be used; for example, through sound, physical structure, chemical composition, or many others. Accordingly, one of skill in the art will recognize that digital image data, as used herein, may be understood to include any digital data that represents physical characteristics of a physical object. For the sake of brevity but not limitation, digital images and digital image data of the present disclosure are described in the context of pixel-based digital images captured by a scanner or digital camera device and processed with a specifically coded computing system.

The present disclosure is directed toward a novel approach that identifies a physical object, dimensions that physical object, and makes the identification information and dimension information available to one or more applications, which take action based on the information. The physical objects that are dimensioned, identified, transported, and otherwise acted on are abstract objects unless the context in which the term, "object," is used dictates otherwise (*e.g*., a computer-based object formed in software). These physical objects have size, weight, and other qualities that exist in the physical world. In at least some cases, a "physical object," as the term is used herein, comprises a plurality of physical objects packaged together, and in at least some of these cases, the at least some of the physical objects are physical objects of a same type.

Several embodiments are described. None of the embodiments are intended to be limiting, but to instead provide an example that is useful to teach those of ordinary skill in the art. Exemplary embodiments that are described with respect to manufacturing often have close parallels in item transport (*e.g*., baggage handling systems) and vice versa.

Some embodiments combine linear dimensioning of the physical object with determining the weight of the object and tracking the object. Other embodiments combine weighing with tracking, linear dimensioning with tracking, or some other dimensioning with tracking, and in some cases, dimensioning and identifying is combined without tracking. Other embodiments are contemplated as will be apparent in the present disclosure.

This present disclosure is further directed toward systems, devices, and method that dimension an object (*e.g*., linear measuring, weighing, and the like), extract a digital fingerprint of the object, and use the information so derived both for helping later to identify the object and for linking the dimensions of the object with other relevant information to a digitally-maintained record of that object. Two, three, four, or even more modules; separate or combined in any logical arrangement, are included in the embodiments contemplated by the inventors. Various ones of these modules are arranged to induct one or more digital fingerprints identifying the object into a repository, weigh the object, linearly dimension the object, determine or intake other characteristic information about the object, and take any number of actions based on information provided for the object.

Embodiments described herein can identify a physical object both when the object is static and additionally, or alternatively, when the object is in motion. These and other embodiments can also dimension the object either statically or in motion.

### Dimensioning and/or Weighing as Part of a Tracking System.

In an embodiment, physical objects move along a conveyor system. The objects pass a station where each object is identified and dimensioned (*e.g*., linearly measured, weighed, or the like). Some or all of the acts in the process of identifying the objects and dimensioning the objects may be performed when the objects are static, in motion, or either static and in motion (*e.g*., on the fly). A database has previously been tied either to the object or to the identification and dimensioning station or to both. With the new identification information and dimension information determined on the fly, that database is updated. The identification information and dimension information may have several uses. It might, for example, simply update a tracking history for the object. The identification information and dimension information may be used to send the object on a route that 1) takes the object to the desired destination while 2) sending the object by a path where the conveyor system is large enough to handle objects having the measured dimensions (*e.g*., linear size, measured weight, or some other dimensions). In some cases, multiple conveyors converge into a single conveyor or vice versa. Prior or subsequent to the flows joining or separating, as the case may be, the identity and location of objects on each conveyor may be known or desirably learned. Before or after objects merge onto a single conveyor track or separate onto two or more conveyor tracks, it may be desirable to know the order and relative position of one or more objects to other objects. The nature of consolidating or separating objects on the various conveyors may change the order and relative position of the objects to each other. A tracking system having an identification and dimensioning station might weigh or dimension and identify each object, compare any two of those weights, dimensions, and/or identifying surface characteristic information with the more recently processed objects from each up-stream conveyor, and determine which object of the merging sets is which.

### Dimensioning as a Filter on Object Identification.

In some embodiments, the number of possible physical objects in the system may be large enough, or the physical objects may be similar enough, that it is desirable or essential to pre-filter the identification to look for any number of objects having one range of sizes and/or weights stored in a first reference repository (*i.e*., database A), another range in a second database B (*i.e*., database B), and so on.

### Dimensioning for Cargo Hold Loading.

In some embodiments, identification information and dimension information is used to improve the loading of luggage, cargo, or other physical objects into the holds of airplanes, trucks, trains, or other transportation methods. In these embodiments, it may be helpful or even necessary to know which physical object is presented, how much the object weighs, and how big the object is so that loading the object may be performed properly, efficiently, or properly and efficiently. Weight information and linear measurement information (*i.e*., types of dimension information) may be used solely for loading or also as part of an identification of the object (*e.g*., coupling the identification information and dimension information in a shared computing structure). Such information permits an operator of the cargo hold loading system to know which object is being loaded and thereby determine, manually or automatically, if the object belongs in this area (*e.g*., the cargo hold of an airplane). Such information also permits the operator of the cargo hold loading system to know whether there are specific handling instructions (*e.g*., if the object belongs to a preferred customer and must be on-loaded or off-loaded in a particular order, etc.).

In some embodiments of dimensioning and cargo hold loading systems, one or more operators of the system may need to perform and report specific weight and balance criteria. The inventors have learned that many airlines have computer programs that direct efficient (*e.g*., "optimized") cargo hold loading procedures, and these computer programs are enabled to use identification information and dimension information as part of the efficient loading process, but conventional systems are not able to generate and provide identification information and dimension information planeside. The inventors have not found any commercial airline systems that collect dimension information at check-in that is also used for loading the airplane's cargo hold. The dimension information collected at check-in is used for tariffing overweight and oversized items, but not used in the cargo hold loading programs. The inventors have further not found any commercial airlines that faithfully collect and use dimension information collected or otherwise determined at any other point of the plane-loading process. Instead, in conventional systems, either no information on the object (*e.g*., luggage) is collected at loading or the "bag tag" is read simply to determine that the object made it to the plane.

In many cases, after a vehicle (*e.g*., truck, train car, shipping container, trailer, airplane, and the like) is loaded and the cargo area is "full," the vehicle could safely carry more weight, but due to inefficient loading that leaves "air space," there is no available space to add additional cargo. It is therefore particularly desirable to know the linear dimensions of the objects intended for placement in the respective cargo hold and to use that linear dimension information as part of an "optimization" loading program that directs efficient (*e.g*., "optimized") placement of each object in the cargo hold. Computing programs of this type can be arranged for loading particular types of vehicles and can, for example, direct cargo handlers where to place a particular item. By combing identification information and dimension information, a cargo hold can be loaded more efficiently and fully, within the bounds of acceptable weight and balance considerations, while also verifying the identity of each object loaded into the cargo hold. In this way, improved energy efficiency and cost-effectiveness can also be achieved.

While providing improved (*e.g*., "optimized") weight and balance characteristics is very often desired, there are other criteria that are sometimes of equal or greater consideration in some embodiments. A cargo loading computer program might, for example, give priority to particular shipments, perhaps because such shipments are of greater urgency, are the luggage of preferred passengers, are from a shipper who is paying an expedited or other premium rate, or are prioritized for some other reason.

Identification information may in some embodiments be further used as part of the loading process in many ways. For example, each passenger on a commercial vehicle (*e.g*., airplane, ship, train, bus, or the like) may be directly notified that his luggage has been loaded, each shipper may be directly notified his freight is on the respective vehicle (*e.g*., airplane, ship, train, bus, or the like), or each other airline that baggage or cargo they are responsible for has been loaded on a particular flight at a particular time. The identification information may additionally or alternatively be used to determine that all expected baggage/cargo has been received and loaded and that the hold can be sealed.

Identification information and dimension information may in some embodiments further be used to ensure that only items destined to a particular vehicle (*e.g*., airplane, ship, train, bus, or the like) for a particular trip (*e.g*., flight, sail, run, or the like) are going to be loaded on the vehicle that makes the particular trip. Embodiments such as this may be accomplished by identifying the physical object (*e.g*., luggage, bag, box, container, or the like), checking identification information against a trip manifest, and determining whether that physical object is approved or otherwise verified to be loaded on the vehicle. Dimension information (*e.g.*, weight, size) may or may not be used in a process of determining, confirming, or otherwise validating the identity of the bag.

Identification information and dimension information may in some embodiments be used to create a report of physical objects that had to be left off the trip (*e.g*., flight, sale, run, or the like) because there was no room, because the physical objects were checked in but did not make it to the vehicle in time, or for some other reason. In these and in other embodiments, identification information and dimension information for each physical object is inducted at check-in (*e.g*., passenger check-in, shipping drop-off, or the like) and identification information and dimension information for each physical object is tested as the objects are loaded on the particular vehicle (*e.g*., airplane, ship, train, bus, or the like).

### Weighing to Determine Nothing Has Been Added or Removed From Piece of Luggage.

The present inventors have recognized that small amounts of illicit materials (*e.g*., a few ounces of explosive material) can cause catastrophic damage to a vehicle (*e.g*., airplane, ship, train, bus, or the like). The inventors have further recognized that by generating identification information and dimension information when a physical objects such as luggage is checked-in, and by regenerating such identification information and dimension information at one or more points before a cargo hold or other area is loaded, or during loading, a suspect physical object having an unexpectedly different weight may be detected and manually or otherwise validated before beginning the trip (*e.g*., flight, sale, run, or the like). In at least one embodiment, identification information and dimension information for an airline passenger's luggage is generated when the luggage is checked-in, and in some cases when the luggage is being carried to the airplane by conveyor. Re-generating the identification information and dimension information at loading enables an exact piece of suspicious luggage (*e.g*., luggage that unexpectedly weighs a few ounces more) to be detected and removed before going on the airplane.

### Dimensioning/Weighing Passenger Carry-On.

In one embodiment, an identification and dimensioning station is located near an airplane passenger boarding gate. A passenger approaches the boarding gate and places his carry-on bag in the vicinity of the identification and dimensioning station. Identification information, dimension information, or both identification information and dimension information will be produced. The identification information and dimension information can be used to determine whether the carry-on bag is small enough and light enough to fit in the overhead bin or underneath a seat. The identification information and dimension information may be tied to a repository (*e.g*., a database) that may contain such information as the maximum size and/or weight allowed into the overhead bin, the amount of space still available in the overhead bins, the class and preferred status of the passenger, and the like.

In some cases, a computing program is used in concert with the identification information and dimension information. The computing program knows the dimensions and capacity of any number of overhead bins on the subject airplane. The computing program may, for example, process the identification information and dimension information against each overhead bin for each class of seating, for a determined section of the airplane, or for the entire airplane. The program might, for example, exclude a certain bag because it is too big to fit into the overhead or because the bins in the bag-owner's seating section are full. The identification information and dimension information could, for example, be used to drive a program that knows the capacity of the overhead bins in the relevant cabin, measures the size of the passenger's bag, and then provides an indication of whether or not the passenger's bag will fit in the available space. Such a computing program may be used in cooperation with any type of vehicle (*e.g*., airplane, ship, train, bus, or the like) to process overhead bin space, under-seat space, or some other space. Such a computing program may also apply rules related to the identification information and dimension information for overall storage space in the vehicle, for each class of space or passenger, for each bin, or for some other space. In these or in other cases, a computing program may use identification information and dimension information to determine whether there is space remaining in the area nearest the passenger, to direct a passenger where, relative to his seat, to place his carry-on, to determine how much space is remaining in the portion of the vehicle associated with the passenger, to determine whether his bag is too large or too heavy for the allotted space, and so on. In these embodiments, the identification information and dimension information may also be used to compile reports, target advertising to a particular passenger, and for many other purposes.

### Weighing and Dimensioning for Tariffing.

In some embodiments, a passenger places a bag on the conveyor at a check-in station to a particular type of transportation (*e.g*., airport, train terminal, bus terminal, cruise terminal, shipping port, or the like). The check-in station may be an identification and dimensioning station arranged to generate identification information and dimension information associated with the specific bag of the passenger. If it is determined that the bag is too large in any dimension or combinations of dimensions, or if the bag is determined to be too heavy, the bag may be tariffed as oversized, overweight, oversized and overweight, or with some other designation. The bag may in some cases be sent to an oversized bag station. In addition, at least in some cases, the identification information and dimension information may be further used in routing the bag to the particular vehicle on which it will be transported.

### An Active Routing, Tracking, or Sortation System.

In some embodiments, a plurality of related or unrelated physical objects moves on a conveyor. The objects may be the same or different sizes, the same or different classes, the same or different weights, the same or different shapes, or the objects may be the same or different in other ways. In the subject embodiment, the objects may need to be routed to different destinations or the objects may need to be routed along different paths based on certain identification information, certain dimension information, or both certain identification information and certain dimension information. In one non-limiting case, parcels can be identified and dimensioned, and the identification information and dimension information can be used to send each parcel to a particular truck assigned to make a delivery to the correct area and having room for the particular parcel. In some cases, such processing may work in cooperation with gathering additional information about the parcel such as reading the postage on the parcel and determining whether the postage is sufficient for the parcel's weight, size, or weight and size.

In some cases, the objects are luggage that move on a conveyor in an airport after a flight, and each piece of luggage may be associated with an object record in a database that has additional information such as the luggage-owner's passenger record. In these or in other cases, the identification information and dimension information may be coupled with routing information to inform the passenger where his bag is or where his bag will be. Such information may, for example, be posted on a bin the bag is placed in or texted to the passenger's phone.

### Tracking an Object During "Manual" Transport.

In one embodiment, a fork-lift driver drives beneath an identification and dimensioning station without stopping. Objects on a load the forklift is carrying are dimensioned, identified, or dimensioned and identified. The identification information and dimension information may be updated automatically, without intervention by the forklift driver or anyone else.

### Dimensioning as a Filter to a Conveyance or Sortation System.

In some embodiments, jamming of conveyance and/or sortation systems is a common cause of system delays leading to increased costs. Objects can be dimensioned as they are ingested into the system and a decision can quickly be made if the object is too large, too small, or too oddly shaped to be accepted into the system.

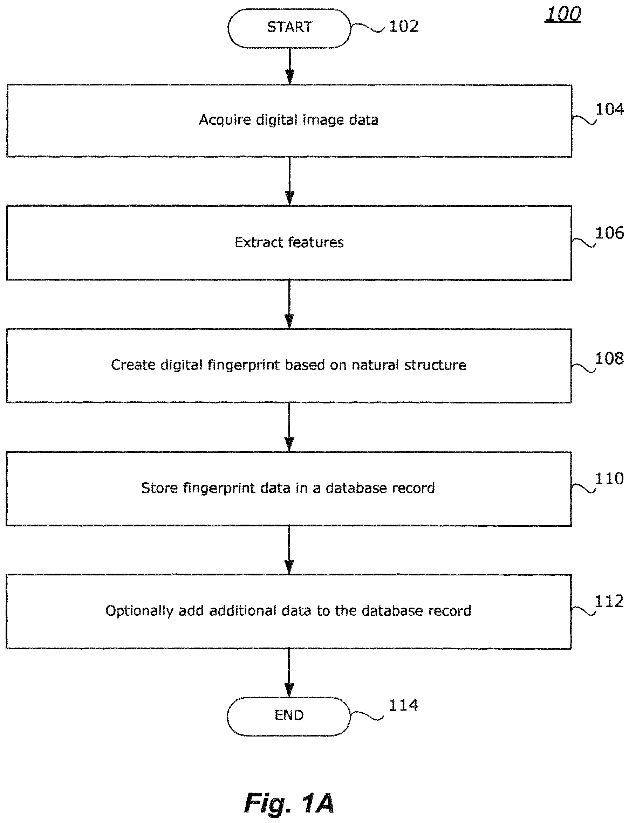

FIG. 1A is a data flow diagram illustrating a method 100 for creating and storing (*e.g*., registering, inducting, inputting, or the like) a digital fingerprint of a physical object in a repository such as a database. At least one digital fingerprint for each physical object of interest is included in the identification information described in the present disclosure.

Processing in one embodiment of the data flow diagram of FIG. 1A begins at 102 with initialization acts for the data flow.

In processing at 104, at least one digital image of a physical object is acquired. Any suitable image capture technologies and devices may be used to acquire the digital image data. The digital image may, for example, be captured by a camera, communicated across a network, retrieved from a memory, generated by a scanner, or acquired in some other way. The digital image data acquired at 104 may be a subset or portion of digital image data derived from a larger data set, which in some cases is a digital image.

At 106, features are extracted from the digital image data. Specific features or regions of interest (*i.e*., authentication regions) may be selected in support of second, third, and any number of subsequent identifications of the physical object. In the embodiments described in the present disclosure, physical objects are identified and dimensioned a plurality of times. In processing at 106, selected features identified in the digital image data are analyzed, and feature vectors are extracted.

Processing continues to 108, where a selected number of feature vectors are combined to form a digital fingerprint. The digital fingerprint may be embodied in a digital file, a digital record, a digital string of information, or in some other digital form that is associated with the original image data.

At 110, the digital fingerprint is stored in a repository, which may be a database. Other forms of searchable digital data storage are also contemplated.

At 112, additional information is optionally added or otherwise associated with the digital fingerprint. The additional information may, for example, be stored in the digital database object record, or associated with it in a related table. The additional information is associated with the physical object. The additional information may include, for example, a description, manufacturer, model number, serial number, contents, time of day, location, status information, transient or persistent data, or any other data, selected as appropriate or useful, depending on the type of object or the context for which the digital fingerprint was generated.

Processing in at least one data flow through the embodiment method 100 for creating and storing a digital fingerprint of a physical object in a repository ends at 114.

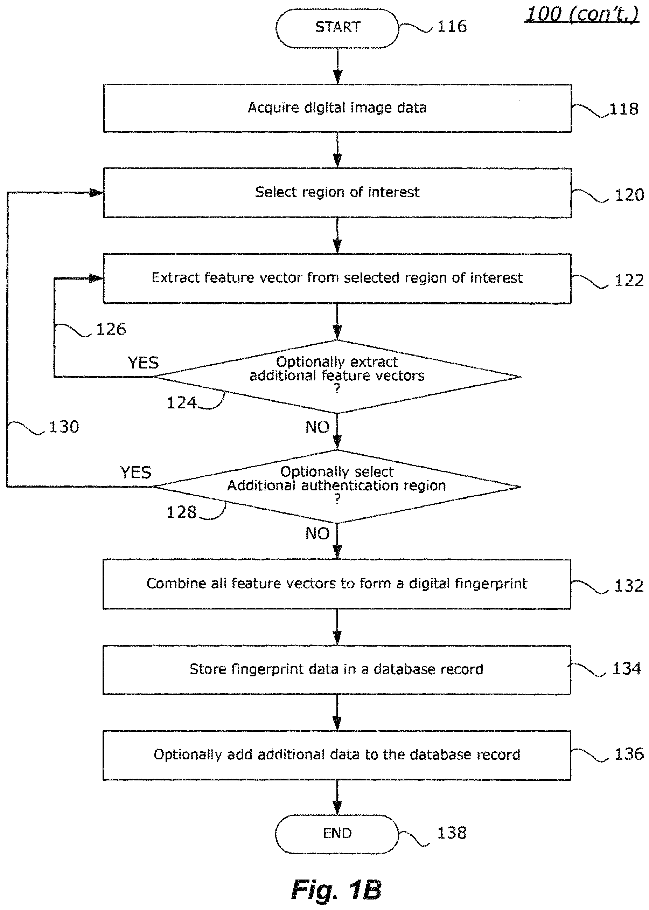

FIG. 1B is a flow diagram illustrating a process that includes more robust feature extraction. FIG. 1B continues or otherwise supplements the method 100 of FIG. 1A. The embodiment of FIG. 1B begins processing at 116, and digital image data is acquired at 118.

At least one region of interest (*e.g*., an authentication region) is selected at 120. The region of interest may be selected by analysis of the image data, analysis of related image data, by reference to a predetermined template that defines at least one region of interest based on the type of object being analyzed, or by some other means.

Processing at 120 and 122 includes extracting any desirable number of feature vectors from the selected region of interest. A feature vector may be used to represent features of the region in the physical object in a more compact form. For example, a feature vector may comprise an array of color or gray scale numeric values corresponding to areas within the selected region of interest. The numeric values may each comprise a sum, average, maximum, or some other function of the individual values of a corresponding group of pixels forming a subpart of the region of interest. In some applications, a feature vector may identify a location and shape of a distinctive aspect of the physical object within a selected region. If additional feature vectors are determined to be extracted from the same image data at 124, processing returns to 122 via data flow path 126, and the act of feature extraction is repeated. The loop 126 may repeat until any selected number of feature vectors is collected.

After the acts of feature vector extraction at the selected region of interest are completed, processing falls to 128. Optionally, there may be any number of other regions of interest in the digital image data to process. In at least some cases, the data flow traverses outer loop 130 back to processing at 120, and at 122, additional feature extractions are performed with respect to one or more additional regions of interest.

In processing at 132, some or all of the extracted feature vectors may be combined to form a digital fingerprint.

At 134, the generated digital fingerprint is then stored, and at 136, optional additional information is also stored. The additional information may include, for example, a description, manufacturer, model number, serial number, contents, time of day, location, status information, transient or persistent data, passenger information, individual and collective travel itinerary information, frequency of detection information, travel route information, or any other data, selected as appropriate or useful, depending on the type of object or the context for which the digital fingerprint was generated.

Processing ends at 138.

In the present disclosure, FIGS. 1A-1B may be collectively referred to as FIG. 1.

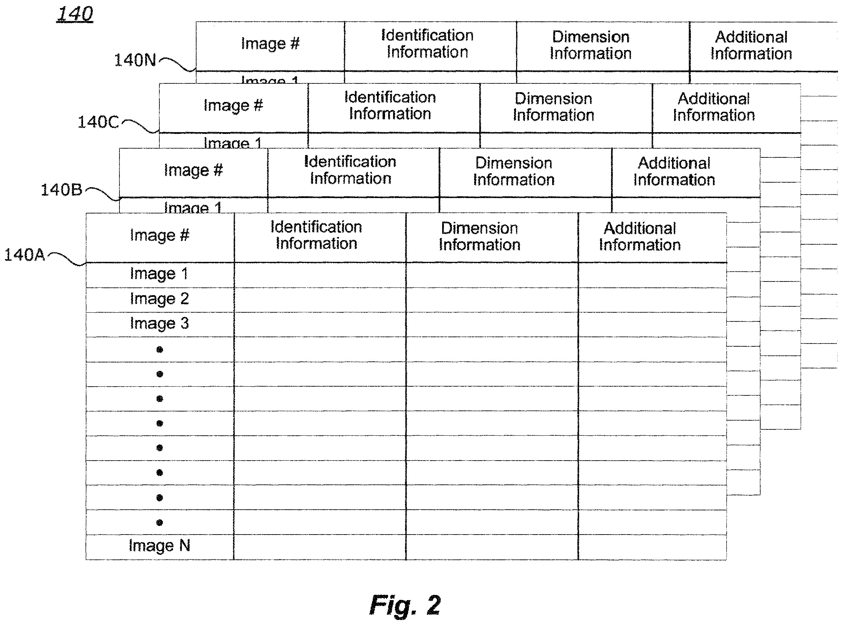

FIG. 2 is a set of exemplary object records arranged to store, retrieve, and process identification information, dimension information, and optional additional information. Four object records 140A-140N are represented in FIG. 2, but it is understood that a system as described in the present disclosure may generate any number of such object records. Each object record is associated with physical object. In some cases, two or more object records are associated with a same physical object. For the sake of simplicity, each of the object records 140A-140N of FIG. 2 may be individually or collectively referred to as an object record 140.

The object records 140 illustrated in FIG. 2 are exemplary. One of skill in the art will recognize that some computing systems may generate object records having the exact fields shown in FIG. 2, and other computing systems may generate object records having more information, less information, and additionally or alternatively, different information.

In FIG. 2, a left-most column of each object record 140 may, for example, include an identifier of the digital image data that is or was used to generate information that populates other fields of the object record 140. The identifier in FIG. 2 is called out as an image number (*i.e*., "Image #"). In other cases, the identifier may be a link, a file name, an encoded value, the digital image data itself, or some other identifier. The image number is used by a computing system to acquire, re-acquire, or otherwise gain access to the digital image data used to generate one or more digital fingerprints (FIG. 1).

The identification information column in each object record 140 is arranged to include at least one digital fingerprint. The inclusion of the digital fingerprint in the object record 140 may include a digital fingerprint, a plurality of digital fingerprints, a link or other reference to one or more digital fingerprints, or some other information that enables a computing system to retrieve or otherwise gain access to the one or more digital fingerprints.

Identification information associated with a particular physical object, as the term is used in the present disclosure, may include any number of digital fingerprints, digital fingerprint records, or the like. Various portions of the identification information may be stored in a repository (*e.g*., a database) of digital fingerprints, which repository is used in embodiments of systems described in the present disclosure. Such systems may include object conveyance systems, airport systems, cargo systems, and many other types of system. A complete or partial object record 140 may be used to facilitate storing and retrieving identification information from the repository.

The dimension information column in each object record 140 is arranged to include dimension information that characterizes the physical object associated with the given object record 140. As described herein, object dimension information may include linear measurement data (*e.g*., a bounding volume, a relative size), weight data, flexibility data, compressibility data, or some other dimensional measurement or physical characteristic. The included measurement data may be encoded. For example, a numerical value may represent one of a set of dimensional values (*e.g*., 1 = small, 2 = medium, 3 = large). In such cases, each encoded data value may be a relative value (*e.g*., 1 = cube of volume X; 2 = cube of volume 8X; 3 = cube of volume 27X).

Dimension information may include actual measurement data that is stored in any selected unit of measurement. Exemplary units include linear measurement units (*e.g*., inches, meters, or the like), volumetric measurement units (*e.g*., cubic inches (in³), cubic meters (m³), or the like), units of weight (*e.g*., pounds, kilograms, or the like), units of flexibility or stiffness (*e.g*., feet/pound, meters/Newton, or the like), and other selected units. In some cases, dimension information is unit-less, such as a compressibility factor or a factor of expansion.

The additional information column of each object record 140 or all object records 140 is optional. The additional information may include, for example, a description, manufacturer, model number, serial number, contents, time of day, location, status information, transient or persistent data, passenger information, individual and collective travel itinerary information, frequency of detection information, travel route information, or any other data, selected as appropriate or useful, depending on the physical object for which the object record 140 is generated.

In some cases, temporary object records are formed having a same or similar structure as the object records 140 of FIG. 2. Temporary object records may be used during the acquisition or other generation of data. As a temporary object record is constructed, for example, the temporary object record may be used to search a repository for stored object records having corresponding information. For example, in some cases, digital image data is used to create a digital fingerprint, which is then stored in a temporary object record. If a repository is searched based on the generated digital fingerprint, and if a corresponding digital fingerprint is located in the repository, a particular action may be taken. For example, the temporary object record may be populated with information from the object record located in the repository. Alternatively, the located object record or an indication thereof may be returned from the repository. In some cases, the additional information of an object record 140 will include history information that identifies each search, query, or other operation that implicates a particular object record 140 stored in the repository.

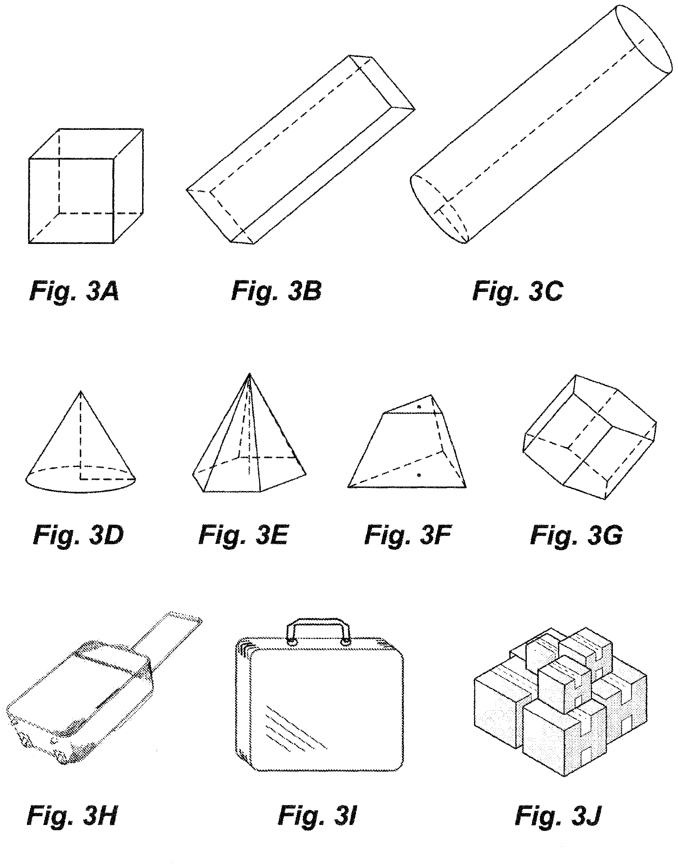

FIGS. 3A-3J present non-limiting shape embodiments that may be represented in dimension information. FIGS. 3A-3G are embodiments of bounding volumes. FIGS. 3H-3J are embodiments of structural arrangements. In the present disclosure, FIGS. 3A-3J may be collectively referred to as FIG. 3. Many other shapes, bounding volumes, and structural arrangements of the physical objects discussed in the present disclosure are contemplated.

The first seven shapes in FIG. 3 (*i.e*., FIGS. 3A-3G) are bounding volumes that may be processed mathematically in the computing systems described herein. The bounding volumes are not physical structures. Instead, the bounding volumes of FIGS. 3A-3G are virtual computing constructs used provide information on which a target computing system can make an automated decision that affects a particular physical object.

A non-limiting example is now considered to describe use of a bounding volume. Considering a conveyor belt system that transports packages, the conveyor system has limitations as to the dimensions (*e.g*., linear size) of packages that can be transported. Packages that are too large in any one or more dimensions may cause the conveyor belt system to clog. In this case the bounding volume of FIG. 3A may be applied to prevent the conveyor belt system from clogging. FIG. 3A is a bounding volume having the shape of a cube. All sides of the cube have an equal linear dimension. When a physical object is processed, the conveyor belt system will determine, for each package, whether or not the package would "fit" (*i.e*., is entirely containable) within a bounding cube of a selected dimension. The selected dimension represents one or more of the dimensional size limits of packages that the conveyor belt system can handle. If a physical object of interest (*i.e*., a certain package) would fit entirely within the bounding volume (*i.e*., the cube of FIG. 3A) of the selected size, the physical object is permitted to move along the conveyor belt system. Alternatively, if the physical object (*i.e*., the certain package) would not fit in the bounding cube having the selected size, the object is not permitted to move along the conveyor belt system. If the conveyor belt system in the present exemplary embodiment is arranged to process every package and determine whether or not every package will fit within the selected bounding cube, the conveyor belt system can prevent oversized packages from being conveyed and reduce the number of "clog" events that would otherwise occur.

In the present conveyor belt system example, the cube-shaped bounding volume of FIG. 3A was considered. In this case, one or more camera devices may be integrated with, or otherwise arranged to operate with, the conveyor belt system. As each physical object (*e.g*., a package) is considered for transport, the object is digitally photographed and one, two, or any number of digital images are acquired. From the one or more acquired digital images, a maximum length, width, and height (*i.e*., depth) of the physical object are determined. In some cases, these maximum linear dimensions are rounded up by a determined amount, rounded up by a determined multiplication factor, rounded up to a "next" unit having particular precision (*e.g*., to a next higher inch, a next higher meter, or the like), or rounded up in another way. Considering the determined length, width, and height measurements, the conveyor belt system will determine whether or not the physical object will fit a bounding cube of a selected size.

Those of skill in the art will recognize that many physical objects are not shaped like a cube, and that a computing system can process digital image data to determine any number of linear dimensions of a physical object, regardless of the shape of the physical object. Accordingly, while a cube shaped bounding volume may provide sufficient or otherwise desirable resolution in some cases, bounding volumes having any other shape may also be employed. For example, if physical objects of interest are shaped like a bag of golf clubs, a bounding volume having at least one rectangular-shaped cross section (FIGS. 3B-3C) may be employed. If physical objects of interest are barrels, a bounding volume having a cylinder shape (FIG. 3C) may be employed.

Those of skill in the art will further recognize that bounding volumes may be used in other ways as well. For example, in some cases, dimension information is determined using two or more bounding volumes. In these cases, in addition to using one or more bounding volumes to determine whether or not a physical object is too large, one or more additional bounding volumes may be used to determine whether or not a physical object is too small. And in these and other cases, information directed toward the flexibility or compressibility of the physical object may also be used, for example, to determine whether or not a physical object will fit into a selected bounding volume.

As illustrated in in FIGS. 3A-3G, bounding volumes of simple shapes may be formed, and bounding volumes having complex shapes may be formed too. In some cases, a bounding volume is formed by a combination of any number of simple or complex bounding volume shapes. In other cases, rather than a bounding volume, a physical object may be computationally represented as a wireframe or another software structure arranged for processing by a computing system. In these cases, the volumetric shape of the physical object can be represented with substantial precision, and a computing system can be arranged to make decisions based on the precise volumetric shape.

Any number of known techniques may be used to generate the dimension information described in the present disclosure. In some cases, the digital image data that is used to generate identification information is also used to generate dimension information. Linear measurements may be determined from the digital image data by any known technique. Alternatively, or in addition, certain physical structures may be used to provide or otherwise facilitate the gathering of dimension information. One or more moveable gates may, for example, be used to determine if a physical object will "fit" or will "not fit." These or other gates may be used to determine if a physical object is "small," "medium," "large," or if the physical object has some other relative linear size characteristic.

Hardware structures may be used to determine how flexible or compressible a physical object is. A plunger, for example, may exert solid physical pressure, air pressure, or some other pressure on a physical object to determine how much the physical object compresses, bends, or resists compression or bending. Compressibility scale factors, flexibility scale factors, or other dimension information may be captured and stored in an object record as part of dimension information associated with a particular physical object.

In some cases, a scale of any desirable precision may be used to determine a weight of a physical object. Some systems include scales that require the physical object being weighed to be stationary on the scale. Other systems permit the physical object to be in motion on the scale when the weighing operation occurs. The scale is arranged to provide the weight of the physical object in any desirable unit of weight. In some cases, weight information is a unit-less, relative value, such as "heavy," "average," "light," "overweight," "underweight," or some other relative weight value. Relative weight values, in the embodiments described herein, may be relative to any weight value known in the system. For example, a piece of luggage weighing more than 50 pounds may be determined to be "heavy," or "overweight." As another example, a package weighing more than 70 pounds may be determined to be "heavy" or "overweight." Relative values may have any desirable encoding. Based on actual weight values or relative weight values, a system may make routing decisions, tariffing decisions, or any other type of decision.

In some cases, a system operator may computationally enter dimension information. Using a keyboard, a mouse, a transceiver, or any other type of computing input device, a system operator may enter linear dimension measurements, weight measurements, bounding volume values, and many other types of dimension information.

FIGS. 3H-3J illustrate non-limiting examples of physical objects that may be represented by dimension information. FIG. 3H is a non-limiting piece of carry-on luggage (*e.g*., a carry-on bag); FIG. 3I is a non-limiting piece of luggage, a briefcase, or some other like structure; and FIG. 3J is a plurality of packages amassed together into a group of packages. The examples of physical objects in FIGS. 3H-3J are not limiting. Instead, the physical objects in FIGS. 3H-3J are used in descriptions of various embodiments of the present disclosures to simplify the descriptions and permit ones of ordinary skill in the art to more easily focus on the inventive concepts presented herein.

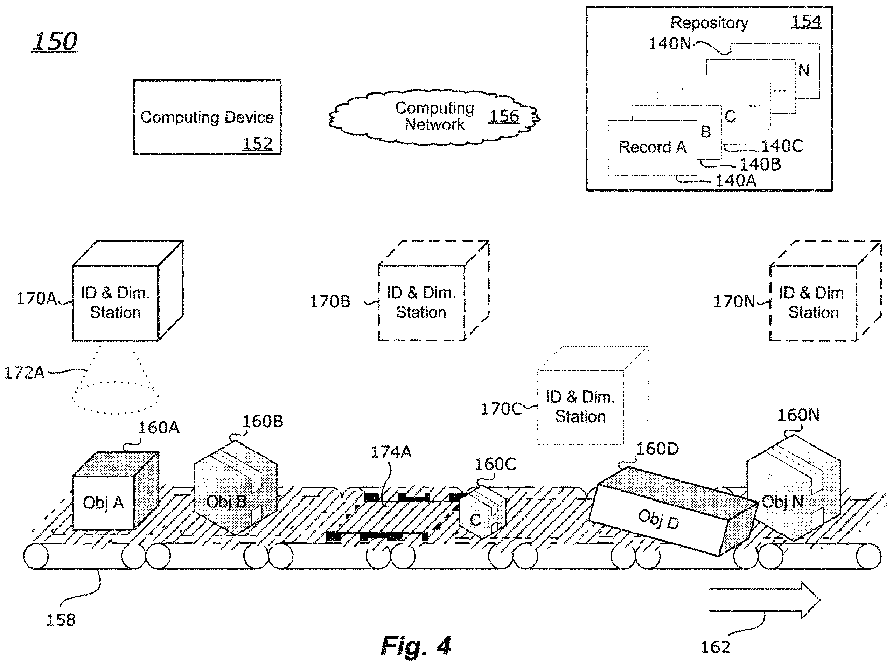

FIG. 4 is an embodiment of a system 150 that employs at least one identification and dimensioning station 170. Identification information, dimension information, or identification and dimension information is generated by each identification and dimensioning station 170. Based on the generated information, a computing device 152 takes any number of actions.

The system 150 of FIG. 4 is represented as including a physical object transport system (*e.g*., a conveyor belt system), but many other systems are contemplated, including systems not based on conveyor belts and systems that do not include a transport medium (*e.g*., hallway, transportation terminal, street, barn, tank, animal pen, and the like). For the sake of example and not limitation, system 150 of FIG. 4 may be embodied as a sub-system that dimensions and/or weighs physical objects as part of a tracking system, a system that performs dimensioning operations on physical objects as a filter on object identification, a system that performs dimensioning for cargo hold loading, a system applied in the commercial passenger transportation industry that weighs physical luggage to determine nothing has been added or removed from a piece of luggage, a system for dimensioning, weighing, or dimensioning and weighing passenger carry-on baggage, a system that performs weighing and dimensioning of physical objects for tariffing, a system that performs active routing, tracking, or sorting, a system for tracking a physical object during "manual" transport, or any other desirable system. System 150 may be arranged to perform package transit system function, automated object transit functions, object tracking functions, cargo space loading functions, passenger carry-on luggage functions, or any other desirable function.

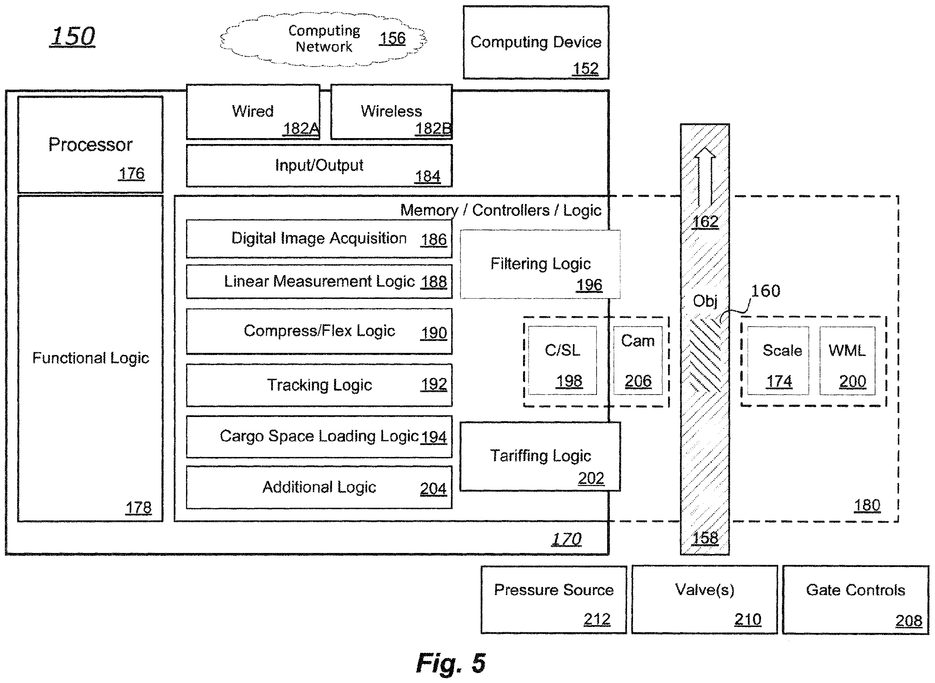

System 150 includes a computing device 152, which controls operations of the system 150. The computing device 152 may be a standalone computing device, a computing device formed in a distributed computing network (*e.g*., a cloud computing device), or some other computing device. In some cases, computing device 152 is embodied in an identification and dimensioning station 170. To simplify the present disclosure, the functions of such a computing device 152 are described in the present disclosure as integrated with an identification and dimensioning station 170 (FIG. 5).

A repository 154 is communicatively coupled to the computing device 152. The repository 154 may be integrated with the computing device 152, or the repository 154 may be separate and distinct from the computing device 152. In some cases, the repository is provided remotely via a distributed computing system. The repository 154 may be a database, a file system, a dedicated or shared memory structure, or some other type of repository.

Repository 154 may store any number of object records 140. Each object record 140 is associated with a single physical object in some embodiments. Alternatively, one or more object records 140 may be associated with a plurality of physical objects. The object records 140 of FIG. 4 are along the lines of object records 140 of FIG. 2.

In FIG. 4, the computing device 152 passes information into and out from the repository 154 via a computing network 156. The computing network 156 may, for example, permit a computing device (*e.g*., computing device 152) to form and respond to repository directives (*e.g*., queries, seeks, stores, compares, and other data manipulation functions) and repository responses.

The operations of the system 150 in FIG. 4 include operations of a physical object transport system 158 arranged to transport any number of physical objects 160. The physical object transport system 158 may include a transportation medium of any type. The transportation medium may, for example, be any one or more of conveyor belts, carts and tracks, trains, forklifts, cranes, robotic machinery, and any other like means. In some cases, the physical object transport system 158 includes a human being carrying one or more physical objects 160, such as carry-on luggage, through a commercial passenger transportation station (*e.g*., an airport, a train station, a cruise ship terminal, a shipping port, or the like).

Physical objects 160A-160N are shown in FIG. 4. For the sake of simplicity, each of physical objects 160A-160N may be individually or collectively referred to as a physical object 160. Additionally, those of ordinary skill in the art will recognize that any type and any number of physical objects 160 may be processed by the system embodiments covered by the present disclosure. The physical objects may include luggage, packages, fully or partially manufactured devices, raw materials to manufacture devices, raw and processed food products, vehicles, systems, sub-systems, human beings and other living things, and any other type of physical object that is desirably acted on based on identification information and dimension information associated with the respective physical object 160. The physical objects 160 may be arranged with determined relationships between them. For example, in some cases, physical objects 160 are arranged in particular space "windows" or "virtual bins," which assists tracking of such physical objects 160 as they move on the transportation medium. Alternatively, the physical objects may be arranged in any order, orientation, spacing, or other such configuration as the particular system 150 requires.

In FIG. 4, the physical objects 160 are arranged to move in a single direction 162 of the physical object transport system 158. It is recognized that the single direction 162 is a non-limiting feature of the embodiment in FIG. 4. In other cases, physical objects move in any desirable direction or directions. The physical objects 160 may move continuously, sequentially, or in some other way. The physical objects 160 may move at any desirable rate of speed and with any other particular characteristics of motion.

A plurality of identification and dimensioning stations 170 are shown in FIG. 4. Each system 150 employs at least one identification and dimensioning station 170, and some systems may optionally employ two, three, or any number of identification and dimensioning stations 170. Four identification and dimensioning stations 170A-170N are represented in FIG. 4. For the sake of simplicity, each of the identification and dimensioning stations 170A-170N of FIG. 4 may be individually or collectively referred to as an identification and dimensioning station 170.

The identification and dimensioning station 170A in FIG. 4 has a sub-system (not shown in FIG. 4) for acquiring digital image data, and a particular digital image acquisition field of view 172A is shown. The digital image acquisition field of view 172A represents the acquisition of digital image data associated with a particular physical object 160 of interest. That is, when a particular physical object 160 of interest is detected and ready for processing (*e.g*., the particular physical object 160 of interest is in line-of-sight proximity to the identification and dimensioning station 170A), digital image data that represents all or a portion of the particular physical object 160 of interest is acquired. Such acquisition may be via a camera sub-system, a scanner, a transceiver that receives the digital image data, or via some other sub-system. As described in the present disclosure, the digital image data may be used to generate identification information, dimension information, or both identification information and dimension information.

The identification and dimensioning station 170A in FIG. 4 also has an optional weighing sub-system 174A for acquiring one or more weight measurements of a particular physical object 160 of interest. The optional weighing sub-system 174A, when it is included, may be physically integrated with the identification and dimensioning station 170A. Alternatively, the optional weighing sub-system 174A may be communicatively associated with the identification and dimensioning station 170A in a different way. In some cases, a single optional weighing sub-system 174A may be associated with two or more identification and dimensioning stations 170.

In some cases, the optional weighing sub-system 174A is arranged to capture weight measurements when the physical object 160 is in motion. In other cases, weight measurements are captured when the physical object 160 is not in motion. The weight measurements captured by the optional weighing sub-system 174A may be used to generate dimension information as described in the present disclosure.

The identification and dimensioning stations 170A-170N in FIG. 4 are represented in a non-limiting relationship to each other and to the physical object transport system 158. In many cases, the identification and dimensioning stations 170 of a given system 150 will be desirably located.

As one example of identification and dimensioning stations 170 that are desirably located, each identification and dimensioning station 170 that includes a camera sub-system will be located relative to the physical object transport system 158 where the digital image acquisition field of view 172A can capture digital image data. As another example, identification and dimensioning stations 170 having an integrated weighing sub-system 174A will be located proximate (*e.g*., below) and in direct physical contact with a transport medium so that weight measurement data may be captured. As yet one more example, if an identification and dimensioning station 170C includes structures arranged to determine compressibility, flexibility, or some other like characteristic of the physical object of interest, then that identification and dimensioning station 170C may be located where a particular structure arranged to assist in the capture of such information can suitably engage (*e.g*., physically contact) the physical object of interest.

In some cases, one or more identification and dimensioning stations 170 may be located where physical objects enter a transport medium, exit a transport medium, or tend to clog a transport medium. In some cases, an identification and dimensioning station 170 is located at a point of human contact (*e.g*., a station for dimensioning luggage and in some cases, collecting payment for luggage having certain dimensional characteristics).

FIG. 5 is a non-limiting embodiment of an identification and dimensioning station 170 in more detail. The station includes a processor 176, functional logic 178, and at least one memory/controllers/logic module 180. In some cases, the processor 176, functional logic 178, and at least one memory/controllers/logic module 180 cooperate to carry out the functional tasks of a computing device 152. In other cases, the identification and dimensioning station 170 is arranged to communicate to a remote computing device 152 via a computing network 156. Accordingly, network 156 may include any one or more of a wide area network (*e.g*., a WAN such as the Internet), a local area network (*e.g*., a LAN such as implemented via Ethernet), a personal area network (*e.g*., a PAN such as implemented by USB or BLUETOOTH), or any other suitable network.

The identification and dimensioning station 170 is arranged to communicate with other computing devices via one or both of a wired communications interface 182A and a wireless communications interface 182B. The other computing devices may include any number of other identification and dimensioning stations 170, computing device 152, or other remote computing devices. Wired, wireless, or wired and wireless communication may occur via computing network 156.

An input/output (I/O) means 184 is arranged to pass information into the identification and dimensioning station 170 and out from the identification and dimensioning station 170. The I/O means 184 may, for example, include general purpose input/output circuits, buffer circuits, latching circuits, interrupt circuits, and other such logic. The I/O means 184 may pass control information such as configuration parameters for specific identification and dimension information collection cycles, timing information, and the like. The I/O means 184 may pass data information identification information and dimension information as the results of particular data collection cycle captured by operations of the processor 176, functional logic 178, and other logic of the memory/controllers/logic module 180. In any number of cases, the I/O means 184 may be arranged for coupling to any one or more of human input devices (*e.g*., keyboards, computer mice, touch screens, and the like), presentation devices (*e.g*., displays, printers, audible sensors, haptic sensors, and the like), computing devices (*e.g*., smart phones, tablets, wearable computing devices, distributed computing devices, Internet of Things (loT) devices, and any other type of computing device), and the like. In at least some cases, the I/O means 184 may be arranged as an image input sub-system that accepts any number of sets of image data and an output record sub-system that provides an object record to a determined function.

Functional logic 178 in the identification and dimensioning station 170 is arranged to carry out functional aspects of the station or system 150 (FIG. 4). Exemplary, but not limiting, functions include package transit system functions, automated object transit functions, object tracking functions, cargo space loading functions, passenger carry-on luggage functions, or any other desirable function. In some cases, the functional logic 178 is arranged as a sub-system that dimensions and/or weighs physical objects as part of a tracking system, a system that performs dimensioning operations on physical objects as a filter on object identification, a system that performs dimensioning for cargo hold loading, a system applied in the commercial passenger transportation industry that weighs physical luggage to determine nothing has been added or removed from a piece of luggage, a system for dimensioning, weighing, or dimensioning and weighing passenger carry-on baggage, a system that performs weighing and dimensioning of physical objects for tariffing, a system that performs active routing, tracking, or sorting, a system for tracking a physical object during "manual" transport, or any other desirable system. Functional logic 178 may, like other logic in the identification and dimensioning station 170, operate at the direction of processor 176. In addition, or in the alternative, functional logic 178 may operate autonomously.

In some cases, functional logic 178 cooperates with other logic modules of the identification and dimensioning station 170 to process digital image data and create any number of digital fingerprints. The functional logic 178 may also direct the creation of commands passed to a repository (*e.g*., repository 154 of FIG. 4) and responses and data received from the repository. In these ways, the functional logic 178 may provide identification information that populates one or more object records (*e.g*., object records 140 of FIG. 2).

A memory/controllers/logic module 180 is arranged as a grouping of memory, circuitry, and other such logic to carry out functions associated with identification and dimensioning operations. The memory/controllers/logic module 180 may be considered as the "brain" of an identification and dimensioning station 170. The memory/controllers/logic module 180 includes software instructions executable by processor 176 and electronic circuitry. One or more portions of the memory/controllers/logic module 180 may be totally contained by the identification and dimensioning station 170, partially contained by the identification and dimensioning station 170, or associated with, but not physically contained by the identification and dimensioning station 170. As evident in FIG. 5, and further described herein, portions of the memory/controllers/logic module 180 may be located outside of the physical bounds of the identification and dimensioning station 170 and oriented about a physical object transport system 158.

Among other logic, as described herein, the memory/controllers/logic module 180 includes digital image acquisition logic 186, linear measurement logic 188, compression/flexibility logic 190, tracking logic 192, cargo space loading logic 194, filtering logic 196, camera/scanner logic 198, weight measurement logic 200, tariffing logic 202, and additional logic 204. Among other hardware structures, the identification and dimensioning station 170 may optionally include a camera sub-system 206 and a scale sub-system 174. The identification and dimensioning station 170 may also optionally include gate controls 208, valves 210, pressure source 212 structures, and other structures to control gating structures of the physical object transport system 158.

Various operations of the logic modules and circuitry of the memory/controllers/logic module 180 are now considered.

Digital image acquisition logic 186 is arranged to direct any suitable image capture technologies and devices to acquire the digital image data. In some cases, for example, the digital image acquisition logic 186 directs camera/scanner logic 198 and camera sub-system 206 to capture any number of digital images of a physical object 160 that is within its range (*e.g*., digital image acquisition field of view 172A in FIG. 4). A plurality of digital images may be captured or only a single digital image. Digital images may be captured while a physical object 160 is static or in motion. The digital image acquisition logic 186 may provide or otherwise direct additional processing to focus a digital image, crop an image, form a composite image from a plurality of digital images, and perform other desirable digital image data processing.

In addition, or in the alternative, digital image acquisition logic 186 may be used to accept or otherwise retrieve digital image data communicated across computing network 156 via one of the wired or wireless communication interface 182A, 182B. In some cases, digital image acquisition logic 186 is arranged to encrypt, decrypt, or otherwise securely handle digital image data. Secure handling of digital image data may operate to anonymize digital data, obfuscate certain or all portions of digital data, and take other desired actions to comply with government mandates, comply with and protect intellectual property rights, or to perform acceptable business practices associated with secure handling of digital image data.

Linear measurement logic 188 is arranged to generate or otherwise provide linear measurement data associated with a selected physical object 160 of interest. Dimension information is comprised, at least in part, from data provided by the linear measurement logic 188 module. In some cases, the linear measurement logic 188 includes digital image data processing that generates linear measurements of a physical object 160. In some cases, the linear measurement logic 188 retrieves linear measurement data from a different source. The linear measurement data may be arranged by the linear measurement logic 188 as express measurements calculated for the specific physical object 160 of interest, measurement data associated with a selected bounding volume (*e.g*., FIG. 3), or referential measurement data that indicates one or more measurements in reference to one or more particular sizes (*e.g*., small, large, oversize, and the like).

Optional compression/flexibility logic 190 is arranged to provide dimension information associated with one or more of the compressibility of a physical object 160, the expandability of a physical object 160, the flexibility of a physical object 160, or some other like characteristic of the object. In some cases, an object is not very dense, and the object's linear dimensions are subject to change under a changing pressure (*e.g*., physical pressure, air pressure, or the like). In these cases, a cargo loading function, for example, may base cargo loading decisions or transport path decisions on the determined compressibility or flexibility of the physical object 160. In other cases, the material that the object is formed from or packaged in will permit or cause changing linear dimensions under various conditions.

To account for such properties, the compression/flexibility logic 190 is arranged to accept or generate compression dimension information, flexibility dimension information or both. Such information may comprise one or more scale factors. In these cases, for example, a linear dimension of a physical object 160 may be multiplied by the scale factor under one or more conditions. A scale factor greater than unity may, for example, indicate that under particular conditions, one or more linear dimensions of a physical object may increase. One case where such a condition may exist is in the cargo hold of an aircraft where a reduced air pressure at altitude will permit certain physical objects (*e.g*., flexible packages having air sealed within) to expand. Other cases are also contemplated. Conversely, a scale factor less than unit may, for example, indicate that under particular conditions, one or more linear dimensions of a physical object may decrease. Such a condition may be found where a physical object of interest is arranged from a "soft" material or soft packaging. In these cases, if such a physical object 160 of interest is located gravitationally or otherwise beneath other objects, the physical object 160 of interest may be compressed.

The compression/flexibility logic 190 may work with valves 210, pressure sources 212, or other structures that directly or indirectly contact the physical object 160 of interest in order to determine how flexible, compressible, expansive, or other such property the object is. Alternatively, or in addition, the compression/flexibility logic 190 may accept dimension information input associated with flexibility and compression of the particular physical object 160 or the class of physical objects that the particular physical object 160 belongs to. In these cases, a system operator or another computing device may provide such input. The input or generated information may be embodied as scale factor (*i.e*., a compressibility factor, a flexibility factor, or the like) in some cases. In other cases, the input or generated information may be embodied in some other way, such as a first set of linear dimensions of the physical object 160 under certain first parameters, and a second set of linear dimensions of the physical object 160 under certain second parameters. In one example, a system operator may input a first set of linear dimension data associated with a certain type of physical object at sea level, a second set of linear dimension data associated with the certain type of physical object at 10,000 feet above sea level (ASL), and a third set of linear dimension data associated with the physical object at 35,000 ASL. In this way, any number of sets of dimension data associated with any desired conditions may be entered. A functional program that makes use of such dimension data may be arranged to make physical object routing decisions, physical object cargo loading decisions, and many other types of decision based on the compression dimension information, flexibility dimension information, or both.

Tracking logic 192 is arranged to support functions of a system that tracks one or more physical objects 160 in a particular space. The space may be indoors, outdoors, or both. The tracking may include real-time tracking, polled tracking, or any other type of tracking. In real-time tracking, any number of physical objects are known or ascertainable in real-time. Such physical objects may be tracked in the given space (*e.g*., a warehouse, a shipping dock, an airport, or the like), and such tracking may include representing one or more of the physical objects 160, statically and in motion, on a presentation device such as an electronic display. Polled tracking generally involves a central control device (*e.g*., processor 176) directing inquiries to one or more physical devices 160 that result in responses having location information. The inquiries may be scheduled inquiries, event-driven inquiries, or manually requested inquiries. The responses may include identification information associated with the particular device, two- or three-dimensional location information, encoded information, or any other desirable location information.

In some cases, the tracking logic 192 includes one or more predictive algorithms. Predictive algorithms can combine location information associated with a particular physical object 160 with operational information associated with a particular physical object transport system 158 (*e.g*., speed of a transport medium, number of other physical objects on the transport medium, expected delays in the transport medium, and the like). Predictive algorithms can provide time-based information indicating when a particular physical object will show up at a determined destination. The time-based information may in some cases be a predicted time window indicated when the particular physical object will show up at a determined destination.

In some cases, the tracking logic 192 is embedded in one or more identification and dimensioning stations 170. Additionally, or alternatively, in some cases, tracking logic 192 may be embedded in a computing device 152. Any number of tracking logic 192 modules in any number of devices may cooperate to track any number of physical objects 160. Cooperation may include processing digital image data to produce and share identification information associated with a particular object, a particular location, and a particular time. In some cases, one or more identification and dimensioning stations 170 operate under the direction of a computing device (*e.g*., computing device 152 or an identification and dimensioning station 170) to produce identification information and associated location information upon request.

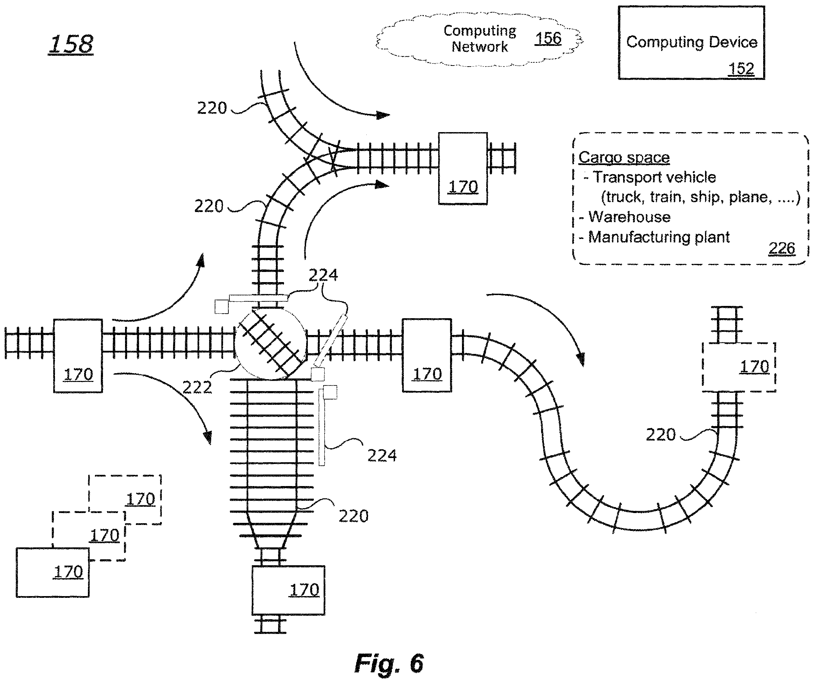

Cargo space loading logic 194 is arranged to support functions of a system that loads physical objects into a finite, confined space, which may be integrated with a transport vehicle or arranged in another space. In cases of a transport vehicle, the transport vehicle may be an automotive vehicle (*e.g*., a tractor trailer, a bus, a truck, or the like), a train, a ship, an airplane, or some other vehicle. The automotive vehicle may be powered by a petroleum-based fuel, electricity, or some other energy source. The finite, confined space may be referred to as a cargo hold, a container, a train car, a warehouse or manufacturing facility storage bay, a luggage compartment, an overhead bin, an under-seat area, or by some other like term. For simplicity in the present application, the term cargo space 226 (FIG. 6), as used in the present disclosure, is used to individually or collectively mean any or all of such finite, confined spaces.

In some cases, if the actual linear measurements of a plurality of physical objects, respectively, are known, or if a bounding volume of a plurality of physical objects, respectively, is known, then a cargo space loading logic 194 module may be arranged to provide guidance for efficient loading of the cargo space 226 with the plurality of physical objects. Efficient loading may include loading the cargo space 226 quickly, loading the cargo space 226 so that objects placed in the cargo space 226 in reverse order of their intended removal from the cargo space 226, loading the cargo space 226 with a predetermined set of physical objects, or loading the cargo space 226 in another way.

The cargo space loading logic 194 module may, in some cases, work cooperatively with the tracking logic 192 module. In these cases, information from the tracking logic 192 module that predicts or otherwise generates time-based information indicating when a particular physical object will show up at the cargo space 226 is used to support directions indicating how the cargo space 226 is to be loaded.

Along these lines, in at least one embodiment, the cargo space loading logic 194 module and the tracking logic 192 module work cooperatively to group particular physical objects 160 together on a transport medium of a physical object transport system 158. A first group of physical objects 160 may, for example be a certain number of luggage pieces that are owned by a plurality of people who are traveling together. The first group of physical objects are ingested into the physical object transport system 158 and travel along the transportation medium 220 (FIG. 6) with a second, larger group (*e.g*., hundreds, thousands, or some other number) of other physical objects. In the case of the certain number of luggage pieces, information that associates one passenger with another one or more passengers (*e.g*., members of a family, co-workers traveling together, a class of students, passengers scheduled to travel on the same subsequent connecting flight, a team of athletes, or the like) may be stored in the identification information, dimension information, or additional information of any number of physical object records 140. In this case, the cargo space loading logic 194 module may operate components of the physical object transport system 158 (*e.g*., steering apparatus 222, gating structures 224, transportation medium speed controls, and other like physical object control means) to arrange the first group of physical objects 160 to travel together in the physical object transport system 158 or to arrive at a destination at about the same time (*e.g*., within one minute, within 5 minutes, or some other time). The cargo space loading logic 194 may direct certain ones of the first group of physical objects along one route of travel, and the cargo space loading logic 194 may direct other ones of the first group of physical objects along another route of travel, and even in this case, the cargo space loading logic 194 is arranged to operate any one or more of the physical object control means in a way that results in each of the first group of physical objects to arrive a common destination at about the same time.

As one non-limiting example, a five-person band and its instruments are traveling on a commercial aircraft. Certain ones of the band's instruments may be oversized along one or more linear dimensions (*e.g*., length, width, height), others of the band's instruments may be overweight, and still others of the band's instruments may be designated as "fragile." In such a case, an object record 140 associated with each piece of luggage is created as the airline, using a particular identification and dimensioning station 170, accepts the luggage into its baggage-handling system. The identification and dimensioning station 170 creates identification information (*e.g*., digital fingerprints) for each of the band's instruments and for each piece luggage checked by the five members. The created identification information or additional information of each object record 140 of interest may be commonly linked as associated with the group of five band members. When the airplane arrives at its destination, and when the luggage is retrieved from the airplane's cargo space and passed on the physical object transport system 158 at the destination airport, one or more identification and dimensioning stations 170 at the destination airport will function to deliver all of the instruments and luggage to the baggage claim destination area at the same time. Accordingly, the identification and dimensioning stations 170 may direct the oversized instruments along a first travel route of the physical object transport system 158, the overweight instruments along a second travel route, the fragile instruments along a third travel route, and the standard size and weight luggage along a fourth travel route. Using transport media speed controls, steering apparatuses 222, gating structures 224, and any other physical object control means, the cargo space loading logic 194 is able to efficiently separate the luggage to facilitate smooth operations of the physical object transport system 158 and re-group the luggage to improve the band members' flying experience.

In some cases, the cargo space loading logic 194 is embedded in one or more identification and dimensioning stations 170. Additionally, or alternatively, in some cases, cargo space loading logic 194 may be embedded in a computing device 152. Any number of cargo space loading logic 194 modules in any number of devices may cooperate to load any number of physical objects 160 into a determined cargo space 226. Cooperation may include processing digital image data to produce and share identification information and dimension information associated with a particular object, a particular location, and a particular time. In some cases, one or more identification and dimensioning stations 170 operate under the direction of a computing device (*e.g*., computing device 152 or an identification and dimensioning station 170) to produce cargo space loading directions upon request.

Filtering logic 196 is included in systems where decisions regarding a selected path of travel for at least one physical object 160 are made. In some cases, for example, a physical object transport system 158 such as a conveyor belt system has multiple belts, paths, sources, and destinations. Such a system may be deployed in an airport luggage handling system, a package handling warehouse, or some other environment. In these cases, which inherently process physical objects of many different sizes and shapes, and which include multiple points where physical objects enter and exit the transport medium, filtering decisions may need to be made regarding any one or more physical objects. While most physical objects are transported over a "standard" first path of travel, an oversized object, such as an unusually large or heavy suitcase, may need to be directed along a certain second path of travel better equipped to transport the oversized object. In these cases, an identification and dimensioning station 170 is arranged to generate identification information and dimension information for each physical object. The standard-sized objects are permitted to pass via a certain first path of travel. On the other hand, when the oversized object is detected via its identification, via its oversized dimension data, or via some other course of action, the oversized object is directed along a determined second path of travel. In some cases, the filtering decisions direct the operations of gate controls 208, valves 210, pressure sources 212, or some other logic that controls the path of travel that the oversized object will traverse.

The filtering logic 196 module is coupled to tracking logic 192 module in some cases. In these cases, tracking logic 192 may know in advance when a particular path of travel is crowded or likely to become delayed, and tracking logic 192 may work cooperatively with filtering logic 196 to route or re-route physical objects 160. In these cases, dimension information that is captured by the system, and the dimension information may be used to control any number of steering apparatus 222 (FIG. 6) (*e.g.*, turn tables, gates, drop outs, track switchers, and the like), gating structures 224 (FIG. 6), and other control means when a decision is made that a particular object of interest is too large, too small, too oddly shaped, too heavy, too light, too inflexible, too compressive, too expansive, or having some other dimension property that is incompatible or otherwise undesirable with the physical object transport system 158.

In at least one case, the filtering logic 196 is arranged to pre-filter a plurality of physical objects 160. For example, if an identification and dimensioning station 170 is ingesting the plurality physical objects 160, the filtering logic 196 may be arranged to identify each object having one or more particular dimensions. The one or more particular dimensions may be objects having a certain specific linear dimension (*e.g*., one or more of length, width, height) or range of linear dimension, a certain volume or volume range, a certain weight or weight range, a certain minimum or maximum flexibility or compressibility, or some other dimensional characteristic. In some cases, the filtering logic 196 may look for the identification information of physical objects of interest in a certain repository; in other cases, the filtering logic 196 may look for the physical objects of interest in the physical object transport system 158. Any number of dimensions, ranges of dimensions, sets of identification information, or the like may be filtered.

The camera/scanner logic 198 works in cooperation with one or more camera/scanner sub-systems 206. The camera/scanner sub-system 206 may comprise any type of imaging structures described or otherwise contemplated in the present disclosure. The camera/scanner sub-system 206 may employ any type of digital imaging modality described or otherwise contemplated in the present disclosure. In some cases, the camera/scanner sub-system 206 is arranged in physical proximity to some portion of a physical object transport system 158. In this way, the camera/scanner sub-system 206 is arranged to capture any number of digital images or any amount of digital image data associated with each physical object 160 that is within a digital image acquisition field of view 172A.

The camera/scanner logic 198 may be arranged to control any number of imaging parameters of the camera/scanner sub-system 206. Such imaging parameters may include one or more of shutter speed, aperture, and light sensitivity (ISO). Other digital imaging parameters are also contemplated. In some cases, a system operator, a computing device, or some other structure may direct settings of the digital imaging parameters.

Camera/scanner logic 198 may take direction from digital image acquisition logic 186, functional logic 178, processor 176, or some other source. The camera/scanner logic 198 may be arranged to base a digital image capture operation on motion that is detected in or near the digital image acquisition field of view 172A of the camera/scanner sub-system 206. The camera/scanner logic 198 may be arranged to capture digital image data on a determined schedule. For example, in some cases, the determined schedule is coordinated with the operational speed of a transport medium in a physical object transport system 158. Alternatively, or in addition, a gate control 208 or valve 210, for example, may trigger a digital image capture operation based on a physical object contacting a gate structure, passing a sensor (*e.g.*, a light-based sensor, a sound-based sensor, or the like), or providing some other input signal.

Weight measurement logic 200 works cooperatively with a scale sub-system 174. The scale sub-system 174 may include any number of load sensors, micro-electromechanical (MEMS) devices, tension-sense devices, deflection-measurement devices, or any other weighing apparatus. The weight measurement logic 200 may perform many weight-based operations.

One operation that weight measurement logic 200 may direct or perform includes conversion operations. Conversion operations generate digital weight values from analog measurements. Another operation that weight measurement logic 200 may direct or perform is to detect a physical object on a weighing platform structure of the scale sub-system 174. Such detection may trigger one or more weighing operations. The weight measurement logic 200 may further include comparison logic. In these cases, one operation that may be performed by the weight measurement logic 200 is to generate a signal if a weight of a physical object exceeds a first selected value. The signal may be used, for example, to direct gate controls 208, valves, 210, or some other system associated with the physical object transport system 158.

Tariffing logic 202 is used generate specific values or other indications of a tariff to be assessed based on an event associated with a determined physical object 160. In some cases, for example, a system may determine that a tariff is owed based on any one or more pieces of information in the identification information and dimension information.

Considering identification information, a tariff may be assessed based on the specific identification (*e.g*., digital fingerprint, object type, object age, or some other information associated with the object's identity) of a physical object. The physical object may, for example, be associated with a passenger of a certain class. The physical object may be associated with a specific type or class of object that is taxed or tolled at certain rate. The physical object may have a certain age or age range. A tariff may be assessed based on some other identification-based purpose.

Considering dimension information, a tariff may be assessed if one or more linear dimensions indicate that the device is oversized, under-sized, or has a complex shape. A tariff may be assessed if the physical object of interest is too flexible or not sufficiently flexible, is too compressible or not physical object of interest compressible enough, is too expandable or not expandable enough, or if the physical object of interest has some other characteristic that initiates the tariff.

The tariffing logic 202 may cooperate with any one or more of the logic modules and structures associated with the identification and dimensioning station 170. Tariff information may be communicated to or from the computing device 152.

The additional logic 204 may include logic for any other purpose not described in detail in the present disclosure. For example, the additional logic 204 may include circuitry, software, or circuitry and software to initiate and execute math functions, computing device functions (*e.g*., counting, looping, comparing, calculated, and the like), repository functions, and the like. Other computing operations known to those of skill in the art may be enabled, implemented, or otherwise assisted by the additional logic 204.

FIG. 6 is an embodiment of an exemplar physical object transport system 158. In the embodiment, a plurality of identification and dimensioning stations 170 are arranged about a transportation medium 220. Also in the embodiment, a plurality of identification and dimensioning stations 170 are arranged separate and distinct from a specific transportation medium 220. In other embodiments of systems contemplated in the present disclosure, any number (i.e., one or more) of identification and dimensioning stations 170 are included, and each of the included identification and dimensioning stations 170 may or may not be arranged in proximity to a specific transportation medium 220.

The physical object transport system 158 may include a transportation medium 220 of any type. The transportation medium 220 may, for example, be or include any one or more of rollers, conveyor belts, carts, tracks, trains, forklifts, cranes, robotic machinery, and any other like means. The transportation medium may include segmented portions, continuous portions, or portions arranged in any suitable way. The transportation medium 220 portions may be stationary or mobile. The embodiment of FIG. 6, which is represented as a conveyor system or a system of tracks, is not limiting. The unlabeled arrows in FIG. 6 indicate a direction of travel of physical objects, but such directions are not limiting. In some cases, rather than a specific transportation medium 220, the physical object transport system 158 includes a human being carrying one or more physical objects 160, such as carry-on luggage, through a commercial passenger transportation station (*e.g.,* an airport, a train station, a cruise ship terminal, a shipping port, or the like). In these cases, the human being and his route and means of travel (*e.g.,* hallways, rooms, vehicles the passenger rides in, escalators, elevators, and the like) toward a destination are considered as a transportation medium.

The physical object transport system 158 may include any number of steering apparatus 222 and any number of gating structures 224. Some systems may not include any steering apparatus 222, and some systems may not include any gating structures 224. Steering apparatus 222 and gating structures 224, when either or both are included, may be controlled by gate controls 208 (FIG. 5), valves 210 (FIG. 5), or by some other means. Accordingly, the operations of such steering apparatus 222 and gating structures 224 may be directed by functional logic 178, digital image acquisition logic 186, tracking logic 192, cargo space loading logic 194, filtering logic 196, camera/scanner logic 198, weight measurement logic 200, or by some other logic.

In some cases, one or more portions of the transportation medium 220 cause physical objects 160 to move or be moved toward a cargo space 226. The travel of the physical objects may be controlled or otherwise directed by logic that directs operation of one or more steering apparatuses 222 (*e.g.,* turn tables, gates, drop outs, track switchers, and the like). An appropriately located steering apparatus 222 is controllable to cause any number of physical objects 160 to travel along a selected route of travel. The steering apparatuses 222 may be used to steer a physical object 160 along a selected route of travel; alternatively, or in addition, the steering apparatuses 222 may be used to steer a physical object 160 away from a selected route of travel. In this way, physical objects may be filtered, tracked, appropriately loaded into a cargo space 226, and acted on in other desirable ways.

In the embodiments described in the present disclosure, a control system such as an identification and dimensioning station 170 or a computing device 152 may direct a route of travel for a plurality of physical objects. The direction provided may individually or concurrently be based on one or more characteristics of the physical objects. In at least one embodiment, a single route of travel of a single physical object 160 from a first point to a second point may concurrently or sequentially be directed based on the identification information associated with the single physical object 160, the dimension information associated with the single physical object 160, and one or more pieces of data associated with the entire system. The identification information on which the routing of the single physical object 160 is based may include a digital fingerprint, a class of object, an identity of the object's identified owner or custodian, a destination for the single physical object 160, a source point of the single physical object 160, or some other identification information. The dimension information on which the routing of the single physical object 160 is based may include a linear dimension (*e.g.,* oversized length, oversized width, oversized height) of the single physical object 160, a weight of the single physical object 160, a compressibility of the single physical object 160, a flexibility of the single physical object 160, or some other dimension information associated with the single physical object 160. The system-wide data on which the routing of the single physical object 160 is based may include the number of other physical objects traversing the physical object transport system 158, a clog or jam in some portion of the physical object transport system 158, a fault in a portion of the physical object transport system 158, or some other condition in the physical object transport system 158.

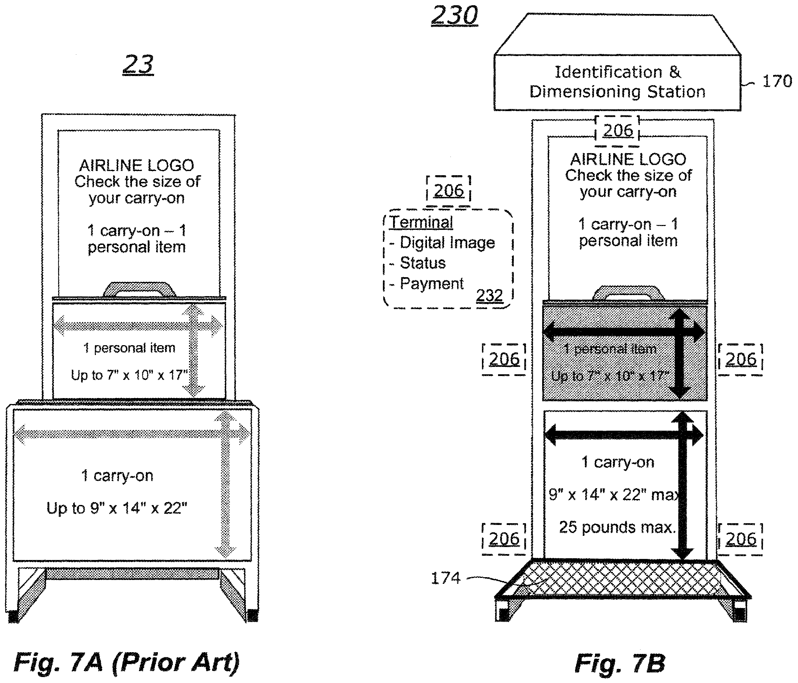

FIG. 7A is a conventional airline baggage sizing kiosk 23. The conventional airline baggage sizing kiosk 23 is a mechanical structure in FIG. 7A that a traveler is encouraged to use prior to boarding the associated airplane. In other cases, similar kiosks are used by train travelers, ship passengers, or people who travel by some other vehicle.

The conventional airline baggage sizing kiosk 23 includes two areas by which a traveler can "measure" their luggage for compliance with the subject airline's rules. In the embodiment of FIG. 7A, the airline has determined that a personal item of luggage must be sized having a length of 17 inches (17") or less, a width of seven inches (7") or less, and a height of ten inches (10") or less. The airline has determined that a carry-on luggage bag must be sized having a length of 22 inches (22") or less, a width of nine inches (9") or less, and a height of 14 inches (14") or less. If a traveler's personal item luggage or carry-on luggage exceeds any of the maximum dimensions, the traveler should, by airline rule, be prohibited from bringing the luggage on the plane, pay an extra tariff (*i.e.,* fee), or be subject to some other action. Conventionally, even though enforcement of the rules may enhance safety, traveler comfort, or provide other benefits, these airline rules are seldom enforced.

FIG. 7B is an embodiment of an improved baggage sizing kiosk 230. The improved baggage sizing kiosk 230 is arranged with at least one identification and dimensioning station 170, which may be integrated with the kiosk or located proximate to the kiosk. In some cases, various portions of an identification and dimensioning station 170 are separate and distinct, and the various portions are selectively located at or near the improved baggage sizing kiosk 230. In other cases, each of the various portions are integrated in a common housing of the identification and dimensioning station 170.

The improved baggage sizing kiosk 230 of FIG. 7B is a free-standing structure. One or more of such structures may be located at a passenger terminal or boarding gate of an airport, harbor, port, shipping station, train station, or any other suitable location. In some cases, the improved baggage sizing kiosk 230 is integrated with a desk or terminal that is staffed by commercial carrier personnel. Such a desk or terminal may be used to sell tickets, issue boarding passes, serve as a checked-baggage ingestion point, and for other purposes. Accordingly, the improved baggage sizing kiosk 230 of FIG. 7B may be used for processing more than carry-on luggage and personal item luggage. In some embodiments, the improved baggage sizing kiosk 230 is alternately or additionally used to process checked bags at a commercial passenger transportation terminal, freight at a common carrier or other shipping terminal, or some other type of physical objects 160 at some other location.

Luggage processed with the improved baggage sizing kiosk 230 are physical objects 160 as such physical objects 160 are described in the present disclosure.

As presented in the non-limiting embodiment of FIG. 7B, the identification and dimensioning station 170 comprises one or more camera/scanner sub-systems 206, one or more weighing sub-systems 174, and an electronic terminal 232. The camera/scanner sub-systems 206 and weighing sub-systems 174 of FIG. 7B may be controlled and operated as discussed in the present disclosure.

The electronic terminal 232 may be an input device, an output device, or an input/output device. The electronic terminal 232 may include manual entry devices (*e.g.,* keyboard, mouse, touch screen, biometric sensor, document or image scanner, payment reading device, and the like). The electronic terminal 232 may include automatic entry devices (*e.g.,* proximity sensor, motion detector, RFID or other like reader, and the like). The electronic terminal 232 may further include output devices (*e.g.,* electronic display, printer, audio transducer such as a buzzer or speaker, haptic feedback device such as a vibrator, and the like).

Considering one non-limiting embodiment of use of the improved baggage sizing kiosk 230, a passenger is preparing for air travel and arrives at the airport with luggage. As the passenger approaches the improved baggage sizing kiosk 230, operations of the identification and dimensioning station 170 are initiated. The passenger may be automatically detected via a proximity sensor, motion sensor, RFID or other electronic sensor, or some by some other means.

In some cases, digital image data, biometric data, or other identification data associated with the passenger is captured as "passenger identification data." In some cases, one or more digital fingerprints are generated based on the passenger identification data. The passenger identification data may be stored in a temporary object record 140. The passenger identification data may be used to retrieve one or more of a travel itinerary for the passenger, travel itineraries of other travelers associated with the passenger, known preferences or travel habits of the passenger, and other information.

The passenger may then place his luggage on some portion of the improved baggage sizing kiosk 230 such as a lower platform area on or near a weighing sub-system 174. The baggage may be placed one bag at time or in some other embodiments, two or more bags may be concurrently placed on the kiosk.

In cases where multiple bags are concurrently placed on the kiosk, the weighing sub-system 174 may work cooperatively with other logic of the kiosk (e.g., camera/scanner sub-system 206, motion sensors, or other input devices) to capture separate weight and identification information as each piece of luggage is added to the kiosk. In these or other cases, the weighing sub-system 174 may include a plurality of independently and cooperatively coupled loadcells or other weighing devices. In these cases, weight measurement logic 200 (FIG. 5) may be arranged to work cooperatively with identification information to determine the individual weight of each piece of luggage.

In cases where a single bag is placed on the kiosk, the single bag can be weighed.

Still considering the non-limiting embodiment of use of the improved baggage sizing kiosk 230, digital image data associated with each piece of luggage is acquired. In some cases, the digital image data is acquired from one or more camera/scanner sub-systems 206. The digital image data may comprise any number of digital images of the subject bag. From the acquired digital image one or more digital fingerprints are formed. The digital image data, or data representative of the digital image data may in some cases be stored in an object record 140. The one or more digital fingerprints that were generated from the digital image data may also be stored in the object record 140.

In some cases, based on the passenger identification data previously collected or otherwise determined, a repository 154 (FIG. 4) may be interrogated (*e.g.,* queried, searched, or the like). The interrogation is performed to search for and retrieve identification data associated with any number of known pieces of luggage that have previously been ingested into a physical object transport system 158 or previously inducted into the repository 154 in another way. If an object record 140 of a known piece of luggage is found in the repository 154, the retrieved object record 140 may be further supplemented with identification information and dimension information generated by the identification and dimensioning station 170 of the improved baggage sizing kiosk 230.

From the digital image data acquired at the improved baggage sizing kiosk 230 by the identification and dimensioning station 170, any number and type of dimension information data may be generated. For any one or more of a personal item, a carry-on bag, and checked baggage, linear dimension data may be calculated or otherwise determined, weight data may be calculated, compressibility data may be determined, flexibility data may be determined, and other dimension information may be produced.

Further still considering the non-limiting embodiment of use of the improved baggage sizing kiosk 230, in some cases, functional logic 178 (FIG. 4) may cooperate with any other logic of the memory/controllers/logic module 180 to determine if the determined dimension information for any of the passenger's luggage violates any of the airline's rules. If, for example, a linear dimension (e.g., length, width, height) of a piece of luggage is greater that a corresponding dimension permitted by the airline for the particular type of luggage, an alert signal may be generated. The alert signal may also be generated if the piece of luggage is oversized, overweight, or in violation of some other dimensional rule.

Based on the generated alert signal, the functional logic 178 may present alert information to the passenger via the electronic terminal 232. The alert information will indicate to the passenger that a dimension rule for the passenger's luggage has been triggered. In this way, the electronic terminal 232 may be used to compel the passenger to address the alert. In some embodiments, tariffing logic 202 determines a tariff (*e.g.,* additional financial fee, payment, or other form of remuneration) is due, and in these cases, the electronic terminal 232 may inform the passenger that he must provide payment. If the passenger satisfies the tariff, which may be paid via the electronic terminal, via a gate agent, or via some other means, then the dimension information or additional information of an associated object record will be updated indicating that the tariff has been satisfied. Alternatively, if the passenger does not make the determined payment, then the dimension information or additional information of an associated object record will be updated indicating that the tariff has not been satisfied.

One or more identification and dimensioning stations 170 may be arranged in any number of locations in the airport. Checked baggage may pass in proximity to an identification and dimensioning station 170 formed as part of a physical object transport system 158; personal items and carry-on bags may pass in proximity to an identification and dimensioning station 170 positioned in the airport terminal, such as near one or more boarding gates. In these cases, when the identification and dimensioning station 170 re-detects a piece of luggage that has an un-satisfied tariff, a second alert, and any number of additional alerts, may be generated. The second alert and further alerts may be used to collect payment, collect enhanced fees (*e.g.,* additional fees greater than the original tariff amount), prevent the identified piece of luggage from being loaded on the airplane, or the second and further alerts may instigate some other function.

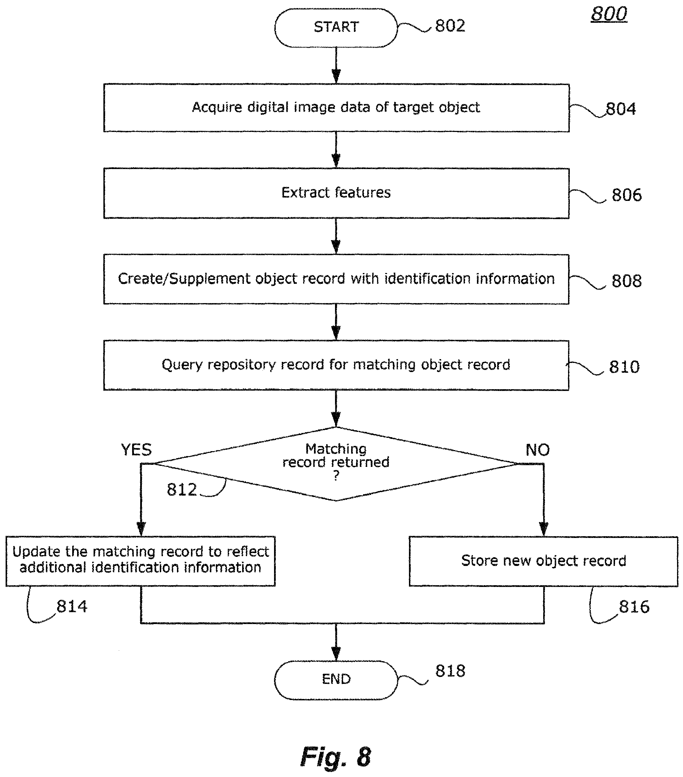

FIG. 8 is a data flow diagram of a method 800 for matching identification information of a physical object 160 (FIG. 4) to identification information stored in a repository 154 (FIG. 4). The method 800 of FIG. 8 may be implemented in functional logic 178, additional logic 204, or some other logic of an identification and dimensioning station 170 (FIG. 5) or computing device 152 (FIG. 4). One of skill in the art will recognize that one or more digital fingerprints of the identification information, or some other data of the identification information may be matched. Finding a matching record in the repository 154 is an indication that the physical object 160 of interest has previously been processed by the identification and dimensioning station 170 or computing device 152 implemented in the associated system.

Processing of the method 800 begins at 802. Other processing has already occurred, and object records 140 associated with a plurality of physical objects 160 have already been stored in the repository 154. Because in many cases it is desirable to know that a physical object 160 has already been processed, the method 800 operates to identify the physical object 160 every subsequent time it is encountered, such as when the physical object traverses a physical object transport system 158, or when a piece of luggage is processed by an improved baggage sizing kiosk 230, or in other cases.

At 804 digital image data associated with a target object 160 is acquired. The acquisition of the digital image data may occur using a camera/scanner sub-system 206 or by some other technique described in the present disclosure. Processing falls to 806, where features are extracted from the digital image data. In at least some cases, the features are intrinsic (i.e., natural) features of the target object 160 and not labels, tags, integrated materials, unique identification characters, codes or items of some other type that may have been affixed or otherwise added to the target object for the purpose of identification.

After extracting features, processing at 808 is performed to create a new object record 140 (FIG. 2) or to supplement an existing object record 140. One or more digital fingerprints created from the digital image data are stored in the object record 140. Other identification information, such as may be entered by a passenger or captured by a sub-system of the identification and dimensioning station 170, may also be entered in the object record. Processing continues to 810.

At 810, the repository 154 is queried for a matching object record 140.

The repository acts on the query at 812, and a determination of a matching record may be made based on any of the identification information stored in the object record. In at least some cases, the repository 154 is queried in search of a digital fingerprint that matches a digital fingerprint stored in the object record. "Matching," in this context, may be relative to a threshold confidence level rather than a binary decision. The requisite confidence level may vary depending on the specific application. The confidence level required may be varied dynamically responsive to the digital fingerprint data and experience with a given system.

If a matching object record 140 is found in the repository 154 in the processing at 812, then processing continues to 814. If no matching object record 140 is found in the repository 154 in the processing at 812, then processing continues to 816.

Considering the affirmative case where an object record 140 associated with a target object 160 of interest is found in the repository, processing at 814 includes supplementing the object record with information from the repository located in the matched object record (*i.e.,* the object record discovered in the repository 154). In some cases, the object record returned from the repository is supplemented, and the updated object record is both re-stored in the repository 154 and communicated to functional logic for further processing.

Considering the negative case of processing at 812 where an object record 140 associated with a target object 160 of interest is not found in the repository, processing at 816 includes storing the "new" object record in the repository 154 and communicating the "new" object record to functional logic for further processing.

Processing of the method of FIG. 8 ends at 818.

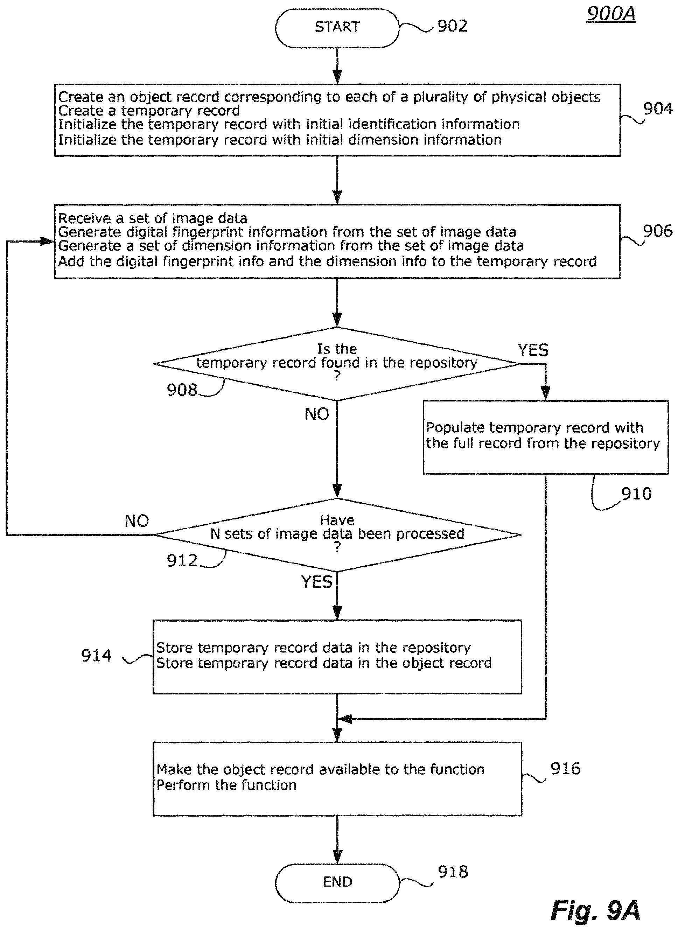

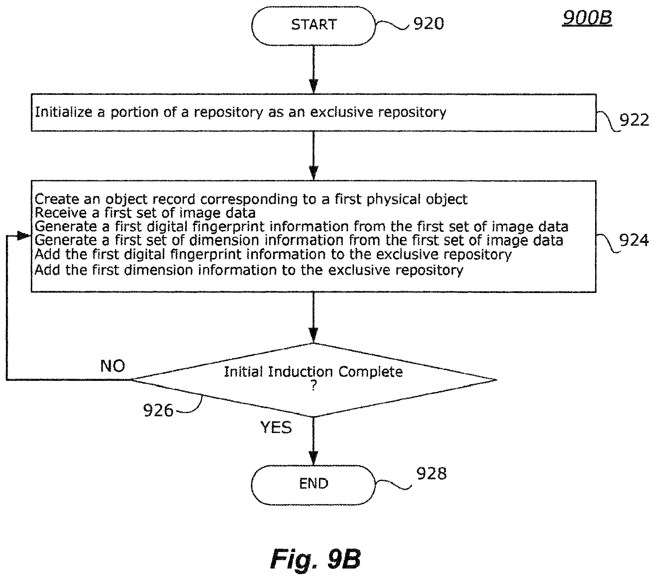

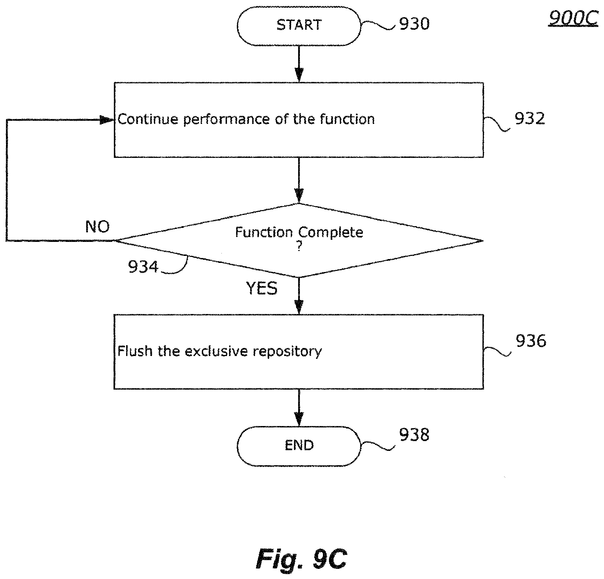

FIG. 9 is a data flow diagram of a method 900A for generating and using identification information and dimension information that is stored in a repository 154 (FIG. 4). FIG. 9B is a data flow diagram of a method 900B for initializing an exclusive repository. And FIG. 9C is a data flow diagram of a method 900C for completing a function and cleaning up the exclusive repository. In the present disclosure, FIGS. 9A-9C may be collectively referred to as FIG. 9.

The identification information and dimension information generated and stored in the repository 154 is associated with any number of specific target physical objects 160 (FIG. 4) of interest that have been provided. Identification information and dimension information that is generated or retrieved from the repository 154 is made available to any number of functions that take action based on the identification information and dimension information. The identification information and dimension information may be stored in an object record. Each object record is associated with a specific target physical object 160 of interest.

Processing in the method 900A begins at 902, and at 904, certain initialization acts are performed. The initialization acts include creating an object record 140 (FIG. 2) corresponding to the each of a plurality of physical objects 160 (FIG. 4) and creating a temporary object record. The temporary object record, which will be used to query a repository 154 (FIG. 4), is initialized with initial dimension information, and the temporary object record is initialized with initial identification information. Both the initial identification information and the initial dimension information may include null (*i.e.,* 0) data or some form of encoded data. The initial identification data, for example, may include data bits having a same value throughout a structure, a "known" digital fingerprint value that indicates a system owner, a location, or a value coded to provide some initial information. The initial dimension information may include zeroed linear measurement data, encoded linear measurement data that indicates a formed but unused memory structure, or some other initialization data.

Once the initial acts of 904 are performed, processing advances to 906. At 906, digital image data is received or otherwise acquired (*e.g.,* from a camera/scanner sub-system 206 (FIG. 5) or some other image capturing device, from a memory, from another computing device, or from some other source). The acquired digital image data may be a set of digital image data or a plurality of sets of digital image data. It may in some cases be considered that there are "X" sets of digital image data provided, and each of the "X" sets is sequentially processed in a looping function that is exited when either a matching object record is found or when all of the "X" sets of digital image data have been processed. The value of "X" may be a maximum number of digital image sets to be processed. The value of "X" may be set by a system operator, another computing device, or in some other way.

From the digital image data, one or more digital fingerprints or sets of digital fingerprint information are generated. Also from the from the digital image data, a set of dimension information is generated. The digital fingerprint information and dimension information is added to the temporary object record. The set of dimension information may include linear measurement data (*e.g.,* length, width, height) associated with physical objects of interest, which are calculated in a known way. In some cases, the linear measurement data is provided by a software algorithm in a known way. The set of dimension information may also include weight data from a weighing sub-system 174 (FIG. 5), compressibility information, flexibility information, and other dimension information. In some cases, the dimension information includes a bounding volume (FIG. 3) that is sized to entirely contain the target physical object 160 of interest. The bounding volume may include linear measurement information, an encoded value indicating a known bounding volume (*e.g.,* a cube, a cylinder, a pyramid, or some other symmetric shape; a complex shape; a shape having at least one square cross section; a shape having at least one radius), or some other bounding value. The dimension data is also stored in the temporary object record. In some cases, user-defined data may also be stored in the temporary record. The user-defined data may include bibliographic information associated with the digital image data (*e.g.,* time, date, location, imaging device source identifier, class or type of physical object, and many other user-defined values). The user-defined data may be stored in the additional information portion of an object record 140.

After generating and storing the identification information and dimension information associated with a physical object from the set of digital image data, processing advances to 908. Here, the repository 154 is queried to determine whether or not an object record corresponding to the physical object 160 of interest is stored in the repository 154.

If in the processing at 908 it is determined that the object record corresponding to the physical object 160 of interest is stored in the repository 154, processing falls to 910. Else, processing falls to 912.

At 910, the processing at 908 has found the object record corresponding to the physical object 160 of interest in the repository 154, and so the temporary object is populated with the full record from the repository. In some cases, the created object record is defined as the record located by the querying. Such acts may be carried out in some cases by loading software pointers rather than copying data stored in an object record. After populating the temporary record, processing falls to 916.

Alternatively, if processing at 908 determines that the temporary record is not found, processing falls to 912. At 912, it is determined if a sufficient number of sets of digital image data have been processed. This act is performed in an attempt to determine if any object records corresponding to the target object 160 of interest have been found in the repository 154. If "N" sets of digital image data have been processed without finding a corresponding object record 140, processing falls to 914. Alternatively, if additional sets of digital image data should be processed, then processing returns to 906. In some cases, the sufficient number of "N" sets of digital image data to process is ten; in other cases, the sufficient number is less than 10, more than 10 but less than 50, or more than 50.

To reach processing at 914, it has been previously determined at 912 that no data stored in the temporary object record has been found in the repository. Such a determination is an indication that the target object of interest has not previously been processed. In the processing at 914, the data in the temporary object record is stored in repository 154, and the data in the temporary object record is stored in the object record that will be passed to a particular function. Processing falls to 916.

At 916, the object record 140 that corresponds to a particular target object 160 of interest has been populated with identification information, dimension information, and additional information. The information in the object record 140 will include data determined from the acquired digital image data and data from the repository 154 if the target object 160 of interest has been previously processed. Alternatively, the information in the object record 140 will include data determined only from the acquired digital image data if the target object 160 of interest has not been previously processed.

Processing of the method 900A ends at 918. It is understood, however, that in some embodiments, processing of the method 900A is ongoing each time a physical object of interest is processed by an identification and dimensioning station 170.

Subsequent to the end of processing at 918, any number of functions may make use of the information in the object record. The information may be processed by functional logic 178 (FIG. 5) of an identification and dimensioning station 170 or a computing device 152 (FIG. 5). The information may be processed by a physical object transport system 158 (FIG. 6) such as a system arranged to transport packages, luggage, or some other types of objects. In addition, or in the alternative, the information in the object record may be processed by any one of an automated object transit function, an object tracking function, a cargo space loading function, a passenger carry-on luggage function, or some other processing function.

FIG. 9B is a data flow diagram of a method 900B for initializing an exclusive repository. In some cases, processing of method 900B occurs in the method 900A (FIG. 9A) prior to processing at 906. In some cases, processing of method 900B occurs many times, and some of those times may be before processing at 906 (method 900A in FIG. 9A), and some of those times may be during other processing of method 900A. The processing of method 900B occurs at 922-926, between a start of processing at 920 and an end of processing at 928.

Method 900B may be included when a system 150 (FIGS. 4, 5) includes any number of identification and dimensioning stations 170, and when the system 150 is used to repeatedly perform a same function or set of functions. For example, if one or more identification and dimensioning stations 170 are used in a system 150 that loads cargo spaces, the method 900B may be included. In such a system 150, an exclusive repository can be formed for each cargo space, alternatively, or in addition, an exclusive repository can be formed for each session that loads a cargo space, even when the same cargo space is loaded multiple times.

One example of a cargo space loading system 150 that may include optional method 900B is a system 150 implemented in a business that transports vehicle tires from a warehouse to regional automotive shops (*e.g.,* "stores") that sell and install vehicle tires. In this case, the cargo space (*e.g.,* "box") of each tractor trailer is loaded with tires, and a driver of the tractor trailer delivers the tires to stores along a designated route. When the driver arrives at each store along his designated route, he opens the tractor trailer's box and hopes to remove the tires allocated to the particular store from the back of the trailer's box. The driver hopes that the tires were loaded into the box in reverse order of delivery and that he will not have to move many tires to find the tires that are being delivered to the store where he has stopped. Accordingly, a cargo space loading function will load vehicle tires from the warehouse into the tractor trailer box in a desired order, and the cargo space loading function will capture identification information and dimension information on each tire that is loaded into the box.

The warehouse may be loading many tractor trailer boxes with tires at any given time, and the warehouse will be loading the same tractor trailer boxes every time the deliveries of tires to the stores are made and the truck has returned to the warehouse. For these reasons, the system 150 may be arranged to create an exclusive repository for each cargo space loading session that occurs. The exclusive repository may be a standalone repository, or the exclusive repository may be a portion of an existing repository.

At 922, the exclusive repository is initialized.

At 924, at least one object record corresponding to a first physical object is created. A first set of image data is processed, and from the first set of image data, first digital fingerprint information is generated. A first set of dimension information is also generated from the first set of image data, and the first identification (*e.g.,* digital fingerprint) information and first dimension information is added to the exclusive repository.

Processing at 924 can occur any number of times, for any number of physical objects. The processing at 924 may be considered as an induction or ingestion process of initial physical objects into a repository. After each object record bearing identification information and first dimension information is stored in the repository, processing at 926 determines if additional physical objects are to be inducted into the repository. If there are additional physical objects are to be inducted, processing returns to 924. Else, processing falls to 928 and ends processing of method 900B.

FIG. 9C is a data flow diagram of a method 900C for completing a function and cleaning up the exclusive repository. In some cases, processing of method 900C occurs in or concurrent to the method 900A (FIG. 9A) in processing at 916. In some cases, processing of method 900C occurs many times. The processing of method 900C occurs at 932-936, between a start of processing at 930 and an end of processing at 938.

Processing 932 includes continued performance of the function started in processing 916 (FIG. 9A) of method 900A. The function makes use of information in the repository. The repository may in some cases be an exclusive repository dedicated to performance of the function. At 934, if the function is complete, processing falls to 936; else, processing returns to 932. After the function is complete, at 936, the exclusive repository, if such a repository is in use, is flushed. Processing ends at 938.

Yet one more embodiment of the systems 150 and identification and dimensioning stations 170 described herein is now considered. The embodiment is a system 150 that processes checked luggage (*e.g.,* performs automated airline checked baggage functions) for a commercial airline. Four locations are considered; each of the four locations has an identification and dimensioning station 170 installed or otherwise available for use. All of the locations are in or associated with an airport.

A first location is at a first airport where airline passengers check in for a flight. The first location may be a check-in counter, and the first location may have a station along the lines of an improved baggage sizing kiosk 230 (FIG. 7B).

A second location is at the first airport where luggage is loaded into the cargo hold of an aircraft scheduled to conduct a commercial flight associated with a particular passenger booked to travel on the commercial flight. The second location may be formed at a terminus of a transport system 158 along the lines of the physical object transport system 158 in FIG. 6. The cargo space 226 in the transport system 158 may be the cargo hold of the subject aircraft. The second identification and dimensioning station 170 is arranged in proximity to where luggage will enter the aircraft. The luggage entering the aircraft is luggage that has been checked into the system 150 at the first location.

A third location is at a second airport. The second airport is a final destination airport reached at the conclusion of the commercial flight associated with the particular passenger booked to travel on the commercial flight. The third identification and dimensioning station 170 is arranged in proximity to where luggage will exit the aircraft (*e.g.,* by baggage handlers at the second airport). The third location may be a starting point of a second transport system (*i.e.,* the transport system along the lines of the physical object transport system 158 in FIG. 6, which is in operation at the destination airport),

The fourth location is a baggage claim area at the second airport, which is the terminus 226 of the second transport system 158 at the second (*i.e.,* destination) airport.

In the system 150 now considered, only four locations and only four identification and dimensioning stations 170 are described, but one of skill in the art will recognize that any number of locations and any number of identification and dimensioning stations 170 may be installed and in use.

Considering an operation of the embodiment now described, in view of the method acts of FIG. 9, a first particular passenger arrives with a plurality of suitcases to be checked-in for a flight that the first passenger is taking. The airline has installed a system according to the methods 900A, 900B, 900C of FIG. 9.

At the first location, each of the first passenger's bags is passed in proximity to the first identification and dimensioning station 170. Each bag, individually or collectively, may be placed on an improved kiosk (FIG. 7B). For each bag, any number of digital images of the bag may be captured. From the captured digital image or images, a first set of image data is retrieved and processed. A first digital fingerprint is generated from the first set of image data, and a first set of dimension information is generated from the first set of image data.

Additional information from the first passenger is also captured. The additional information may include information representing a commercial flight on which the first passenger and the first passenger's checked luggage are booked to travel, information on the airline, information on the number of passengers traveling with the first passenger, information on the number of bags checked, and many other types of information. The identification information (*e.g.,* a first digital fingerprint), the first set of dimension information, and the optional additional information, is added to a first object record, and the first object record is stored in an exclusive repository dedicated to the commercial flight on which the first passenger is traveling. The first object record, and the information stored in the exclusive repository, are available to the automated airline passenger checked baggage function.

The first passenger may check in any number of bags. Other passengers traveling on the same commercial flight as the first passenger may also check in bags. Digital images of each bag that is checked into the system are captured. Identification information (*e.g.,* one or more digital fingerprints) for each back that is checked into the system is generated, along with dimension information and optional additional information. The generated information (*i.e.,* identification information, dimension information, and optionally the additional information) for every piece of checked luggage is stored in an object record of the exclusive repository.

In some cases, none of the digital images of any checked luggage are stored or maintained. That is, after the identification information and dimension information is generated, the corresponding digital image is destroyed or otherwise not saved. In other cases, some or all of the captured digital images are stored in the same repository or a different repository. In these cases, each digital image that is stored may or may not be linked with stored information about the passenger who is responsible for the particular bag.

In some cases, for example in the cases of passengers having a particular class or designation, digital images or digital image data may persist. That is, in some cases, certain information about a passenger and a passenger's luggage is maintained by the airline. In some cases, information about preferred passengers is maintained. A preferred passenger may be a passenger flying a particular class of commercial flight (*e.g.,* first class, enhanced class, upgraded class, coach class, or any other class). A preferred passenger may be any one or more of a passenger designated on a watch list, a passenger with previously known disruptive behavior, a passenger with a previously disclosed need for special attention, a passenger traveling with previously known luggage, a passenger that has volunteered to have personal information stored, a passenger maintaining an active flight travel club membership, and the like. The list of preferred passenger classes is neither complete nor exhaustive nor limiting.

When each passenger, including the first passenger, checks in luggage at the first location, the dimensioning information may indicate that a particular rule of the airline has been violated. The particular rule may be that the dimension of any particular type is across a threshold. The luggage may be too long, too wide, too tall, too narrow, too short, too inflexible, too heavy, too light, to expandable, to intolerant to low air pressure, or in violation of some other rule. In these cases, the detection of the rule violation may cause a signal to be generated. The signal may be audible, visual, tactile or some other signal. The signal may be automatically communicated to an airline representative or a computing device associated with the airline. In some cases, the signal is communicated to a presentation device of a kiosk having a payment terminal. In cases where the rule violation is cured via a tariff (*e.g.,* extra fee, penalty, or the like), the passenger responsible for the unacceptable luggage may pay a fee to have the rule waived.

In the embodiment now under discussion, all checked bags of all passengers enter the transport system and are transported to the second location at or near the aircraft designated for the commercial flight. Each bag passes through, under, over, or otherwise in proximity to the second identification and dimensioning station 170. Digital images are captured and processed, and the designated repository dedicated for the particular flight is queried. For each bag that is identified as having been previously checked in for the flight is processed, the identified bags are permitted to be stored in the airplane's cargo hold. Each bag that is not found in the repository, if any, is not permitted to be stored in the airplane's cargo hold.

As baggage is entering the airplanes cargo hold, at least one digital image is captured for each piece of luggage. At least one digital fingerprint is generated, and the repository is searched for a record having the at least one digital fingerprint. If no records are found, then additional digital images may be captured, additional digital fingerprints may be generated, and additional queries of the repository are made. In some cases, repeated attempts are automatically made to determine if the suitcase of interest has been checked into the flight at the first location. If the record is not located, a manual determination or some other determination may be made as to whether or not the un-found bag will be placed on the aircraft.

After the flight, the aircraft has arrived at the second airport. Luggage is removed from the aircraft at the third location, and each bag passes through, under, over, or otherwise in proximity to the third identification and dimensioning station 170. Digital images are captured and processed, and the designated repository dedicated for the particular flight is once again queried. For each bag that is identified as having been previously checked in for the flight is processed, the identified bags are placed on the transport system for delivery to the fourth location (*i.e.,* the baggage claim area). Each bag that came off of the aircraft but was not found in the repository, if any, may be directed for special investigation. Directing a bag for special investigation may be include automatically controlling one or more gating structures 224 (FIG. 6) on the transport system. The digital record may be updated to indicate that each particular bag has reached the transport system at the second airport, and the updated records may be stored in the repository.

As each piece of luggage reaches the baggage claim area, the identification and dimensioning station 170 at the fourth location may capture and process information. Such capturing and processing may include any one or more of capturing digital images, forming identification information, forming dimension information, processing additional information, and updating records in the repository as described in the present disclosure.

After all checked luggage has been processed, information indicating that the commercial flight has concluded may be provided to the automated airline checked baggage function. Based on the received information, the function may flush the exclusive repository of object records associated with passengers on the commercial flight. Such flushing may be performed for privacy reasons, for curation of the repository, and for many other reasons. Once flushed, the system may be re-used in any suitable way, thereby permitting any number of components, modules, structures, methods, and like formed with or as part of the system to be used and re-used.

Having now set forth certain embodiments, further clarification of certain terms used herein may be helpful to providing a more complete understanding of that which is considered inventive in the present disclosure.

In the embodiments of present disclosure, one or more particular structures are arranged to form physical object transport systems 158, identification and dimensioning stations 170, computing devices 152, and other systems and devices. The various components and devices of the embodiments are interchangeably described herein as "coupled," "connected," "attached," and the like. It is recognized that once assembled, the system may be understood as a single system or the system may be understood in view of its individual components. The materials and the junctions formed at the point where two or more structures meet in the present embodiments are joined to a mechanically, electromechanically, or otherwise industrially acceptable level.

FIGS. 1, 8, an 9 include a data flow diagrams illustrating non-limiting processes that may be used by embodiments of object transport systems 158, identification and dimensioning stations 170, computing devices 152, and other systems and devices. In this regard, each described process may represent a module, segment, or portion of software code, which comprises one or more executable instructions for implementing the specified logical function(s). It should also be noted that in some implementations, the functions noted in the process may occur in a different order, may include additional functions, may occur concurrently, and/or may be omitted.

The figures in the present disclosure illustrate portions of one or more non-limiting computing device embodiments such as one or more components of computing device 152 and identification and dimensioning stations 170. These computing devices may include operative hardware found in conventional computing device apparatuses such as one or more processors, volatile and non-volatile memory, serial and parallel input/output (I/O) circuitry compliant with various standards and protocols, wired and/or wireless networking circuitry (e.g., a communications transceiver), one or more user interface (Ul) modules, logic, and other electronic circuitry.

Processing devices, or "processors," as described herein, include central processing units (CPU's), microcontrollers (MCU), digital signal processors (DSP), application specific integrated circuits (ASIC), peripheral interface controllers (PIC), state machines, and the like. Accordingly, a processor as described herein includes any device, system, or part thereof that controls at least one operation, and such a device may be implemented in hardware, firmware, or software, or some combination of at least two of the same. The functionality associated with any particular processor may be centralized or distributed, whether locally or remotely. Processors may interchangeably refer to any type of electronic control circuitry configured to execute programmed software instructions. The programmed instructions may be high-level software instructions, compiled software instructions, assembly-language software instructions, object code, binary code, micro-code, or the like. The programmed instructions may reside in internal or external memory or may be hard-coded as a state machine or set of control signals. According to methods and devices referenced herein, one or more embodiments describe software executable by the processor, which when executed, carries out one or more of the method acts.

As known by one skilled in the art, a computing device has one or more memories, and each memory comprises any combination of volatile and non-volatile computer-readable media for reading and writing. Volatile computer-readable media includes, for example, random access memory (RAM). Non-volatile computer-readable media includes, for example, read only memory (ROM), magnetic media such as a hard-disk, an optical disk, a flash memory device (*e.g.,* a "thumb drive," a solid-state drive (SSD)), a CD-ROM, and/or the like. In some cases, a particular memory is separated virtually or physically into separate areas, such as a first memory, a second memory, a third memory, etc. In these cases, it is understood that the different divisions of memory may be in different devices or embodied in a single memory. The memory in some cases is a non-transitory computer medium configured to store software instructions arranged to be executed by a processor. Some or all of the stored contents of a memory may include software instructions executable by a processing device to carry out one or more particular acts.

The computing devices illustrated herein may further include operative software found in a conventional computing device such as an operating system or task loop, software drivers to direct operations through I/O circuitry, networking circuitry, and other peripheral component circuitry. In addition, the computing devices may include operative application software such as network software for communicating with other computing devices, database software for building and maintaining databases, and task management software where appropriate for distributing the communication and/or operational workload amongst various processors. In some cases, the computing device is a single hardware machine having at least some of the hardware and software listed herein, and in other cases, the computing device is a networked collection of hardware and software machines working together in a server farm to execute the functions of one or more embodiments described herein. Some aspects of the conventional hardware and software of the computing device are not shown in the figures for simplicity.

When so arranged as described herein, each computing device may be transformed from a generic and unspecific computing device to a combination device arranged comprising hardware and software configured for a specific and particular purpose such as to provide a determined technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The embodiments described herein use computerized technology to improve the technology of physical object processing, but other techniques and tools remain available to transport objects, load objects, assess tariffs for carrying of objects, and the like. Therefore, the claimed subject matter does not foreclose the whole or even substantial portions of the object processing technological area. The innovation described herein uses both new and known building blocks combined in new and useful ways along with other structures and limitations to create something more than has heretofore been conventionally known. The embodiments improve on computing systems which, when un-programmed or differently programmed, cannot perform or provide the specific physical object processing system features claimed herein. The embodiments described in the present disclosure improve upon known object processing techniques. The computerized acts described in the embodiments herein are not purely conventional and are not well understood. Instead, the acts are new to the industry. Furthermore, the combination of acts as described in conjunction with the present embodiments provides new information, motivation, and business results that are not already present when the acts are considered separately. There is no prevailing, accepted definition for what constitutes an abstract idea. To the extent the concepts discussed in the present disclosure may be considered abstract, the claims present significantly more tangible, practical, and concrete applications of said allegedly abstract concepts. And said claims also improve previously known computer-based systems that perform object processing operations.

Software may include a fully executable software program, a simple configuration data file, a link to additional directions, or any combination of known software types. When a computing device updates software, the update may be small or large. For example, in some cases, a computing device downloads a small configuration data file to as part of software, and in other cases, a computing device completely replaces most or all of the present software on itself or another computing device with a fresh version. In some cases, software, data, or software and data is encrypted, encoded, and/or otherwise compressed for reasons that include security, privacy, data transfer speed, data cost, or the like.

Repository (*e.g.,* database) structures, if any are present in the physical object processing systems described herein, may be formed in a single repository or multiple repositories. In some cases, hardware or software storage repositories are shared amongst various functions of the particular system or systems to which they are associated. A repository may be formed as part of a local system or local area network. Alternatively, or in addition, a repository may be formed remotely, such as within a distributed "cloud" computing system, which would be accessible via a wide area network or some other network.

Input/output (I/O) circuitry and user interface (Ul) modules include serial ports, parallel ports, universal serial bus (USB) ports, IEEE 802.11 transceivers and other transceivers compliant with protocols administered by one or more standard-setting bodies, displays, projectors, printers, keyboards, computer mice, microphones, micro-electro-mechanical (MEMS) devices such as accelerometers, and the like.

In at least one embodiment, devices such as the computing device 152 and identification and dimensioning stations 170 may communicate with other devices via communication over a network such as computing network 156. The network may involve an Internet connection or some other type of local area network (LAN) or wide area network (WAN). Non-limiting examples of structures that enable or form parts of a network include, but are not limited to, an Ethernet, twisted pair Ethernet, digital subscriber loop (DSL) devices, wireless LAN, Wi-Fi, Worldwide Interoperability for Microwave Access (WiMax), or the like.

In the present disclosure, memory may be used in one configuration or another. The memory may be configured to store data. In the alternative or in addition, the memory may be a non-transitory computer readable medium (CRM). The CRM is configured to store computing instructions executable by a processor of the computing device 152 and identification and dimensioning stations 170. The computing instructions may be stored individually or as groups of instructions in files. The files may include functions, services, libraries, and the like. The files may include one or more computer programs or may be part of a larger computer program. Alternatively or in addition, each file may include data or other computational support material useful to carry out the computing functions of an object processing system of the types described herein.

Buttons, keypads, computer mice, memory cards, serial ports, biosensor readers, touch screens, and the like may individually or in cooperation be useful to a system operator, passenger, or other person operating the subject system. The devices may, for example, input control information into the system. Displays, printers, memory cards, LED indicators, temperature sensors, audio devices (e.g., speakers, piezo device, etc.), vibrators, and the like are all useful to present output information to the system operator, passenger, or other person operating the subject system. In some cases, the input and output devices are directly coupled to the computing device 152 and identification and dimensioning stations 170 and electronically coupled to a processor or other operative circuitry. In other cases, the input and output devices pass information via one or more communication ports (e.g., RS-232, RS-485, infrared, USB, etc.).

As described herein, for simplicity, system operators, passengers, users, and other human beings may in some cases be described in the context of the male gender. It is understood that these human beings can be of any gender, and the terms "he," "his," and the like as used herein are to be interpreted broadly inclusive of all known gender definitions. As the context may require in this disclosure, except as the context may dictate otherwise, the singular shall mean the plural and vice versa; all pronouns shall mean and include the person, entity, firm or corporation to which they relate; and the masculine shall mean the feminine and vice versa.

The terms, "real-time" or "real time," as used herein and in the claims that follow, are not intended to imply instantaneous processing, transmission, reception, or otherwise as the case may be. Instead, the terms, "real-time" and "real time" imply that the activity occurs over an acceptably short period of time (e.g., over a period of microseconds or milliseconds), and that the activity may be performed on an ongoing basis (*e.g.,* acquiring digital image data, generating digital fingerprints, transporting physical objects). An example of an activity that is not real-time is one that occurs over an extended period of time (e.g., hours or days) or that occurs based on intervention or direction by a system operator or passenger or by some other activity.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

Unless defined otherwise, the technical and scientific terms used herein have the same meaning as commonly understood by one of ordinary skill in the art to which this invention belongs. Although any methods and materials similar or equivalent to those described herein can also be used in the practice or testing of the present invention, a limited number of the exemplary methods and materials are described herein.

The terms "include" and "comprise" as well as derivatives and variations thereof, in all of their syntactic contexts, are to be construed without limitation in an open, inclusive sense, (e.g., "including, but not limited to"). The term "or," is inclusive, meaning and/or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Reference throughout this specification to "one embodiment" or "an embodiment" and variations thereof means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or ideas.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

The headings and Abstract of the Disclosure provided herein are for convenience only and do not interpret the scope or meaning of the embodiments.

### Enumerated Example Embodiments

Further examples of embodiments of the present invention are defined, without limitation, by the following Enumerated Example Embodiments (EEEs).
EEE1. A method, comprising:
   creating an object record corresponding to a physical object;
   creating a temporary object record;
   initializing the temporary object record with initial dimension information and initial identification information;
   processing each of N sets of image data, wherein N is an integer that begins at one, said processing including:
      generating an Nth digital fingerprint from the Nth set of image data;
      generating an Nth set of dimension information from the Nth set of image data;
      adding the Nth digital fingerprint and the Nth set of dimension information to the temporary object record;
      querying a repository to locate a record corresponding to the temporary object record;
      if the querying locates the record in the repository corresponding to the temporary object record, defining the object record as the record located by the querying;
      if N has reached a determined maximum number of image data sets processed, storing the temporary object record in the repository and defining the object record as the temporary object record; and
      incrementally continuing said processing of a next set of image data unless the querying has located the record corresponding to the temporary object record or N has reached the determined maximum number of image data sets;
      communicating the object record to at least one function; and
      performing the function.
EEE2. The method of EEE1, comprising:
   processing a first set of image data;
   generating a first digital fingerprint from the first set of image data;
   generating a first set of dimension information from the first set of image data;
   adding the first digital fingerprint and the first set of dimension information to a first object record;
   defining the first object record as the object record; and
   storing the first object record in the repository.
EEE3. The method of EEE2, wherein the at least one function is an automated airline passenger checked baggage function and wherein the first set of image data represents at least one digital image of a first passenger's checked luggage.
EEE4. The method of EEE3, comprising:
   processing a first set of airline passenger data, wherein the first set of airline passenger data includes information representing a commercial flight on which the first passenger and the first passenger's checked luggage are booked to travel; and
   adding the first set of airline passenger data to the object record.
EEE5. The method of EEE4, comprising:
   forming the repository as an exclusive repository dedicated to the commercial flight;
   processing airline passenger data for each passenger that checks luggage on the commercial flight; and
   verifying, via querying the exclusive repository, that each piece of checked passenger luggage that enters a cargo hold of an aircraft scheduled to conduct the commercial flight is associated with a passenger booked to travel on the commercial flight.
EEE6. The method of EEE5, comprising:
   receiving information indicating that the commercial flight has concluded; and
   based on the received information, flushing the exclusive repository of object records associated with passengers on the commercial flight.
EEE7. The method of EEE1, wherein the at least one function is an automated object transit function, an object tracking function, a cargo space loading function, or a passenger carry-on luggage function.
EEE8. The method of EEE1, wherein the determined maximum number of image data sets is 10.
EEE9. The method of EEE1, wherein the Nth set of dimension information includes a bounding volume having dimension information sized to entirely contain the physical object.
EEE10. The method of EEE9, wherein the bounding volume has a length, a width, and a height.
EEE11. The method of EEE9, wherein the bounding volume has at least one square cross section.
EEE12. The method of EEE9, wherein the bounding volume has a radius.
EEE13. The method of EEE1, wherein the Nth digital fingerprint is generated only from intrinsic properties of the physical object represented in the Nth set of image data.
EEE14. The method of EEE1, comprising:
   providing an image capturing device; and
   capturing each of the N sets of image data with the image capturing device when the physical object is in motion.
EEE15. The method of EEE1, comprising:
   adding user-defined information to the temporary object record before storing the temporary object record in the repository.
EEE16. An object identification and dimensioning system to generate a plurality of object records, each one of the plurality of object records associated with a corresponding physical object, comprising:
   an image input sub-system arranged to provide N sets of image data, wherein N is an integer that begins at one and increases incrementally;
   an output record sub-system arranged to provide an object record to a determined function, the object record having object identification information and object dimension information, the object record associated with a certain physical object; and
   a processor-based sub-system that, when in operation, is arranged to begin with a first of N sets of image data and incrementally process each of the N sets of image data until a record corresponding to the certain physical object is located in a repository or N has reached a determined maximum number of image data sets, the incremental processing of each of the N sets of image data including acts to:
      receive the Nth set of image data from the image input sub-system;
      generate an Nth set of dimension information from the Nth set of image data;
      generate an Nth digital fingerprint from the Nth set of image data;
      add the Nth set of dimension information and the Nth digital fingerprint to a temporary object record;
      query the repository to locate a record corresponding to the temporary object record;
      if querying the repository locates the record corresponding to the temporary object record, define the object record as the record corresponding to the temporary object record located by the querying;
      if N has reached the determined maximum number of image data sets, store the temporary object record in the repository and define the object record as the temporary object record; and
      incrementally continue said processing of a next one of the N sets of image data unless the querying has located the record corresponding to the temporary object record or N has reached the determined maximum number of image data sets.
EEE17. The system of EEE16, wherein the certain physical object comprises a plurality of physical objects packaged together.
EEE18. The system of EEE16, wherein the certain physical object comprises one of a plurality of physical objects of a same type.
EEE19. The system of EEE16, wherein the certain physical object is a piece of carry-on luggage.
EEE20. The system of EEE16, wherein the image input sub-system comprises:
   at least one camera device.
EEE21. A non-transitory computer-readable storage medium whose stored contents configure a computing system to perform a method, the method comprising:
   creating an object record corresponding to a certain physical object;
   initializing a temporary object record with initial dimension information and initial identification information;
   incrementally processing N sets of image data, wherein N is an integer that begins at one and increments with processing of each corresponding set of image data, said incremental processing including:
      from the Nth set of image data, generating an Nth set of dimension information and at least one digital fingerprint;
      adding the Nth set of dimension information and the at least one digital fingerprint to the temporary object record;
      querying a repository to locate a record corresponding to the temporary object record;
      if the querying locates the record in the repository corresponding to the temporary object record, defining the object record as the record located by the querying;
      if N has reached a determined maximum number of image data sets, storing the temporary object record in the repository and defining the object record as the temporary object record; and
      after the querying has located the record corresponding to the temporary object record or N has reached the determined maximum number of image data sets, communicating the object record to at least one function.
EEE22. The non-transitory computer-readable storage medium according to EEE21 whose stored contents configure the computing system to perform the method, the method further comprising:
   generating the Nth set of dimension information as a bounding volume of the certain physical object.
EEE23. The non-transitory computer-readable storage medium according to EEE21 whose stored contents configure the computing system to perform the method, the method further comprising:
   performing the incremental processing via a remote computing system.
EEE24. The non-transitory computer-readable storage medium according to EEE22 whose stored contents configure the computing system to perform the method, wherein the bounding volume is provided as an input to a package transit system.
EEE25. The non-transitory computer-readable storage medium according to EEE21 whose stored contents configure the computing system to perform the method, wherein the function is an automated object transit function, an object tracking function, a cargo space loading function, or a passenger carry-on luggage function.

The various embodiments described above can be combined to provide further embodiments. Aspects of the embodiments can be modified, if necessary to employ concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A method, comprising:
creating an object record corresponding to a physical object;
creating a temporary object record;
initializing the temporary object record with initial dimension information and initial identification information;
processing each of N sets of image data, wherein N is an integer that begins at one, said processing including:
generating an Nth digital fingerprint from the Nth set of image data;
generating an Nth set of dimension information from the Nth set of image data;
adding the Nth digital fingerprint and the Nth set of dimension information to the temporary object record;
querying a repository to locate a record corresponding to the temporary object record;
if the querying locates the record in the repository corresponding to the temporary object record, defining the object record as the record located by the querying;
if N has reached a determined maximum number of image data sets processed, storing the temporary object record in the repository and defining the object record as the temporary object record; and
incrementally continuing said processing of a next set of image data unless the querying has located the record corresponding to the temporary object record or N has reached the determined maximum number of image data sets;
communicating the object record to at least one function; and
performing the function.

2. The method of claim 1, comprising:
processing a first set of image data;
generating a first digital fingerprint from the first set of image data;
generating a first set of dimension information from the first set of image data;
adding the first digital fingerprint and the first set of dimension information to a first object record;
defining the first object record as the object record; and
storing the first object record in the repository.

3. The method of claim 2, wherein the at least one function is an automated airline passenger checked baggage function and wherein the first set of image data represents at least one digital image of a first passenger's checked luggage.

4. The method of claim 3, comprising:
processing a first set of airline passenger data, wherein the first set of airline passenger data includes information representing a commercial flight on which the first passenger and the first passenger's checked luggage are booked to travel; and
adding the first set of airline passenger data to the object record.

5. The method of claim 4, comprising:
forming the repository as an exclusive repository dedicated to the commercial flight;
processing airline passenger data for each passenger that checks luggage on the commercial flight; and
verifying, via querying the exclusive repository, that each piece of checked passenger luggage that enters a cargo hold of an aircraft scheduled to conduct the commercial flight is associated with a passenger booked to travel on the commercial flight.

6. The method of claim 5, comprising:
receiving information indicating that the commercial flight has concluded; and
based on the received information, flushing the exclusive repository of object records associated with passengers on the commercial flight.

7. The method of any of claims 1-6, wherein the at least one function is an automated object transit function, an object tracking function, a cargo space loading function, or a passenger carry-on luggage function; and/or:
wherein the determined maximum number of image data sets is 10.

8. The method of any of claims 1-7, wherein the Nth set of dimension information includes a bounding volume having dimension information sized to entirely contain the physical object.

9. The method of claim 8, wherein the bounding volume has a length, a width, and a height; and/or:
wherein the bounding volume has at least one square cross section; and/or:
wherein the bounding volume has a radius; and/or:
wherein the method further comprises:
adding user-defined information to the temporary object record before storing the temporary object record in the repository.

10. The method of any of claims 1-9, wherein the Nth digital fingerprint is generated only from intrinsic properties of the physical object represented in the Nth set of image data.

11. The method of any of claims 1 -10, further comprising:
providing an image capturing device;
capturing each of the N sets of image data with the image capturing device when the physical object is in motion.

12. The method of any of claims 1-11, wherein the certain physical object comprises a plurality of physical objects packaged together; or:
wherein the certain physical object comprises one of a plurality of physical objects of a same type; or:
wherein the certain physical object is a piece of carry-on luggage.

13. An object identification and dimensioning system to generate a plurality of object records, each one of the plurality of object records associated with a corresponding physical object, comprising:
an image input sub-system arranged to provide N sets of image data, wherein N is an integer that begins at one and increases incrementally;
an output record sub-system arranged to provide an object record to a determined function, the object record having object identification information and object dimension information, the object record associated with a certain physical object; and
a processor-based sub-system that, when in operation, is arranged to perform the method of any of claims 1-12.

14. The system of claim 13, wherein the image input sub-system comprises:
at least one camera device.

15. A computer-readable storage medium whose stored contents configure a computing system to perform the method of any of claims 1-12.
